# EUROPEAN PATENT SPECIFICATION

(11) **EP 4 083 168 B1**
(45) Date of publication and mention of the grant of the patent: **18.02.2026**
(21) Application number: 20907352.7
(22) Date of filing: 25.12.2020
(51) Int. Cl.: C08K 5/00, C08K 5/3435, C08K 5/3477, C08K 5/3492, C08K 5/5357, C08L 101/00, C09K 21/12

(54) **FLAME RETARDANT COMPOSITION AND FLAME-RETARDANT THERMOPLASTIC RESIN COMPOSITION CONTAINING SAID FLAME RETARDANT COMPOSITION**
FLAMMHEMMENDE ZUSAMMENSETZUNG UND FLAMMHEMMENDE THERMOPLASTISCHE HARZZUSAMMENSETZUNG MIT DER FLAMMHEMMENDEN ZUSAMMENSETZUNG
COMPOSITION IGNIFUGE ET COMPOSITION DE RÉSINE THERMOPLASTIQUE IGNIFUGE CONTENANT LADITE COMPOSITION IGNIFUGE

(30) Priority: 27.12.2019 JP 2019239539
(43) Date of publication of application: 02.11.2022
(73) Proprietor: Daihachi Chemical Industry Co., Ltd., Osaka-shi, Osaka 541-0053 (JP)
(72) Inventor: FUJIMOTO, Kazuo, Higashiosaka-shi, Osaka 577-0056 (JP); KARAIKE, Sayuri, Higashiosaka-shi, Osaka 577-0056 (JP)
(74) Representative: Uexküll & Stolberg
(86) International application number: PCT/JP2020/048834
(87) International publication number: WO 2021/132597

(56) References cited:
- WO-A1-2014/002958
- WO-A1-2015/064018
- WO-A1-2019/093066
- JP-A- 2007 056 090
- JP-A- 2018 145 224

## Description

### [Technical Field]

The present invention is related to a flame retardant composition for a thermoplastic resin and a flame retardant thermoplastic resin composition using it. The flame retardant composition and flame retardant thermoplastic resin composition of the present invention can be used for molded products such as an automobile upholstery, a packaging material, a material for electrical devices, a sheet or film for building materials, and a material covering electric wire.

### [Background Art]

A thermoplastic resin has been used in a wide variety of fields, such as automotive parts, housings for electric equipments, electric insulating materials, packaging films, building materials, and floor materials. This is from the viewpoints that it is easy to mold a thermoplastic resin, the number of steps for molding a thermoplastic resin is small, and molded products of a thermoplastic resin can be recycled. In addition, although most thermoplastic resins are flammable, there are actually many cases where it is desired to use a thermoplastic resin to produce a molded product for a use in which a flame retardance is required. Therefore, in order to provide a flame retardance to a thermoplastic resin, flame retardants such as a halogen-based flame retardant, a metal hydroxide such as aluminum hydroxide or magnesium hydroxide, red phosphorus which has been subjected to a coating treatment a polyphosphate salt such as ammonium polyphosphate, and an aromatic organic phosphate ester have been used.

However, a halogen-based flame retardant has a problem in that when a molded product containing it is discarded and incinerated, smoke and harmful gasses are generated. In addition, when a metal hydroxide is used as a flame retardant, it is necessary to add a very large amount. Therefore, it is likely to cause deterioration in the physical properties of the thermoplastic resin.

In view of the above, as a non-halogen-based flame retardant, Patent document 1 discloses that a phosphate ester amide and a hindered amine compound are used in combination. However, such a composition has a disadvantage in that the performance of the thermoplastic resin is deteriorated. For example, there is a disadvantage in that when the thermoplastic resin composition is molded, bleed-out is likely to be generated. In addition, Patent document 2 discloses a hindered amine compound having an unsaturated bond, Patent document 3 discloses a hindered amine compound having a carbonate skeleton. However, the flame retardants which are disclosed in these documents have a disadvantage in that the flame retardance of the thermoplastic resin is insufficient or the performance of the thermoplastic resin is deteriorated.

JP 2007 056090 relates to a flame retardant composition comprising different types of phosphoramidates and NOR-type stabilizers.

### [Prior Art Document]

### [Patent Document]

[Patent Document 1] Japanese Patent Publication No. 4721823
[Patent Document 2] US Patent Publication No. 6117995
[Patent Document 3] International Publication No. 2005/082852

### [Summary of Invention]

### [Problems to be solved by the invention]

In view of the above, a non-halogen-based flame retardant for a thermoplastic resin which has a high flame retardant effect and causes a low level of bleed-out regardless of the amount of an added flame retardant has been required.

### [Means for Solving the Problem]

In view of the above-described current status, the present inventors intensively studied. As a result, it was reached that a phosphoramidate compound having a certain structure and a hindered amine compound are used in combination, and optionally a triazine-based compound is further used in combination such that it is possible to provide a non-halogen-based flame retardant composition and a flame retardant thermoplastic resin composition using it which has a high flame retardant effect and causes a low level of bleed-out regardless of the amount of an added flame retardant.

Specifically, in accordance with the present invention, for example, the following compositions are provided.

### (Item 1)

A flame retardant composition for a thermoplastic resin, wherein the composition comprises component (A) and component (B), wherein
the component (A) is a phosphoramidate compound represented by the following general formula (I): 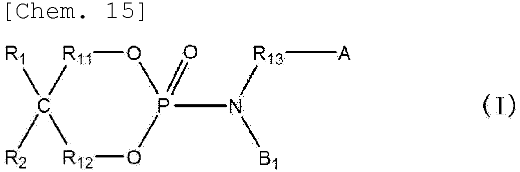
wherein R₁ and R₂ are each independently a hydrogen atom or an alkyl group in which the number of carbon atoms is 1 to 3, R₁₁ and R₁₂ are each independently an alkylene group in which the number of carbon atoms is 1 to 3, R₁₃ is an alkylene group in which the number of carbon atoms is 1 to 6, B₁ is a hydrogen atom or an alkyl group in which the number of carbon atoms is 1 to 6, and A is a hydrogen atom or an organic group represented by general formula (II): 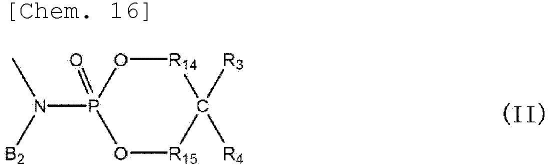
wherein R₃ and R₄ are each independently a hydrogen atom or an alkyl group in which the number of carbon atoms is 1 to 3, R₁₄ and R₁₅ are each independently an alkylene group in which the number of carbon atoms is 1 to 3, and B₂ is a hydrogen atom or an alkyl group in which the number of carbon atoms is 1 to 6, and
wherein when A is a hydrogen atom and B₁ is an alkyl group in which the number of carbon atoms is 1 to 6, then B₁ and R₁₃-A may be bound to form a nitrogen-containing heterocycle with the nitrogen atom to which they are bound, and
when A is an organic group represented by the general formula (II), B₂ is an alkyl group in which the number of carbon atoms is 1 to 6, and B₁ is an alkyl group in which the number of carbon atoms is 1 to 6, then B₁ and B₂ may be bound to form a nitrogen-containing heterocycle with the nitrogen atom to which they are bound and R₁₃, and
wherein the component (B) is a hindered amine compound.

### (Item 2)

The flame retardant composition according to item 1, wherein in the general formula (I), A is an organic group represented by the general formula (II).

### (Item 3)

The flame retardant composition according to any one of items 1 to 2, wherein in the general formula (I), R₁ and R₂ are methyl groups, and R₁₁ and R₁₂ are methylene groups.

### (Item 4)

The flame retardant composition according to any one of items 1 to 3, wherein in the general formula (I), A is an organic group represented by the general formula (II), R₃ and R₄ are methyl groups, and R₁₄ and R₁₅ are methylene groups.

### (Item 5)

The flame retardant composition according to item 4, wherein in the general formula (I), R₁₃ is an alkylene group in which the number of carbon atoms is 1 to 4.

### (Item 6)

The flame retardant composition according to item 5, wherein in the general formula (I), R₁₃ is an alkylene group in which the number of carbon atoms is 1 to 2.

### (Item 7)

The flame retardant composition according to any one of items 4 to 6, wherein in the general formula (I), B₁ and B₂ are hydrogen atoms.

### (Item 8)

The flame retardant composition according to any one of items 1 to 7, wherein the component (B) is a compound which has a piperidine structure.

### (Item 9)

The flame retardant composition according to any one of items 1 to 7, wherein the component (B) is an NOR-type hindered amine compound.

### (Item 10)

The flame retardant composition according to item 9, wherein the component (B) is an NOR-type hindered amine compound, and wherein a chain alkyl is bound to an oxygen atom in the NOR-type hindered amine structure.

### (Item 11)

The flame retardant composition according to any one of items 1 to 7, wherein the component (B) comprises an NOR-type hindered amine structure which has the piperidine structure represented by the following general formula (B3): 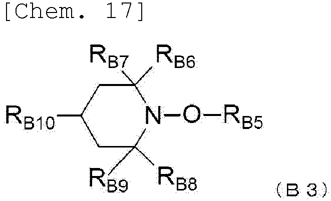
wherein R_{B5} is a straight chain or branched chain alkyl group in which the number of carbon atoms is 1 to 30, a straight chain or branched chain alkenyl group in which the number of carbon atoms is 2 to 30, a cycloalkyl group in which the number of carbon atoms is 5 to 18, a cycloalkenyl group in which the number of carbon atoms is 5 to 18, or a straight chain or branched chain alkyl group substituted with a phenyl group in which the number of carbon atoms in the alkyl group is 1 to 4, wherein, R_{B5} may be substituted with at least one hydroxyl group;
R_{B6}, R_{B7}, R_{B8} and R_{B9} are each independently a straight chain or branched chain alkyl group in which the number of carbon atoms is 1 to 4; and
R_{B10} is any organic group.

### (Item 12)

The flame retardant composition according to item 11, wherein the component (B) is selected from the group consisting of the following general formulas (B4-a), (B4-b) and (B4-c): 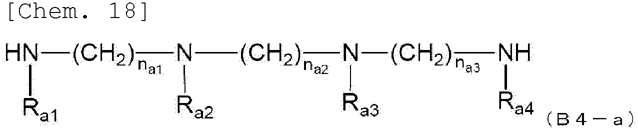
wherein nₐ₁, nₐ₂ and nₐ₃ are each independently an integer of 1 to 4, Rₐ₁ to Rₐ₄ are each independently a hydrogen atom or an organic group of the following formula (B4-a-i), with the proviso that at least one of Rₐ₁ to Rₐ₄ is an organic group of the following formula (B4-a-i): 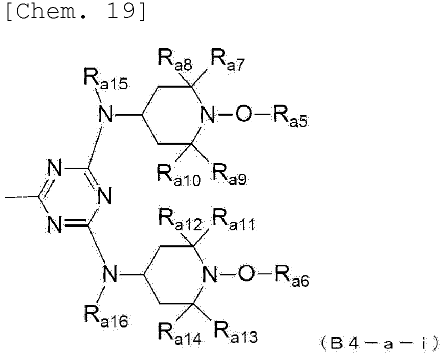
wherein, Rₐ₅ and Rₐ₆ each independently have the same meaning as the meaning of R_{B5},
Rₐ₇, Rₐ₈, Rₐ₉ and Rₐ₁₀ each independently have the same meaning as the meaning of R_{B6}, R_{B7}, R_{B8} and R_{B9}.
Rₐ₁₁, Rₐ₁₂, Rₐ₁₃ and Rₐ₁₄ each independently have the same meaning as the meaning of R_{B6}, R_{B7}, R_{B8} and R_{B9}, and
Rₐ₁₅ and Rₐ₁₆ are each independently a hydrogen atom, a straight chain or branched chain alkyl group in which the number of carbon atoms is 1 to 12 or a straight chain or branched chain alkenyl group in which the number of carbon atoms is 2 to 12; 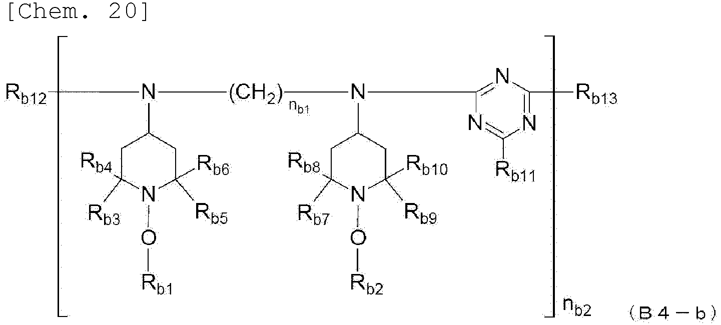
wherein n_{b1} is an integer of 2 to 8,
n_{b2} is an integer of 1 to 10,
R_{b1} and R_{b2} each independently have the same meaning as the meaning of R_{B5},
R_{b3}, R_{b4}, R_{b5} and R_{b6} each independently have the same meaning as the meaning of R_{B6}, R_{B7}, R_{B8} and R_{B9},
R_{b7}, R_{b8}, R_{b9} and R_{b10} each independently have the same meaning as the meaning of R_{B6}, R_{B7}, R_{B8} and R_{B9},
R_{b11} is a nitrogen-containing substituent T₁ of the following formula (B4-b-i), and
R_{b12} and R_{b13} are each independently any organic group, 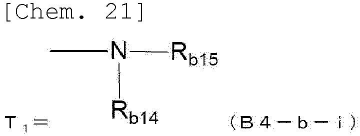
wherein R_{b14} and R_{b15} are each independently a hydrogen atom, a straight chain or branched chain alkyl group in which the number of carbon atoms is 1 to 8 or a substituent T₂ of the following formula (B4-b-ii), 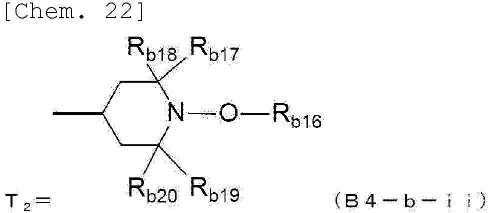
wherein R_{b16} has the same meaning as the meaning of R_{B5},
R_{b17}, R_{b18}, R_{b19} and R_{b20} each independently have the same meaning as the meaning of R_{B6}, R_{B7}, R_{B8} and R_{B9},
wherein, R_{b14} and R_{b15} may be bound to form a morpholino group, a piperidino group or a 1-piperazinyl group with the nitrogen atom to which they are bound; and 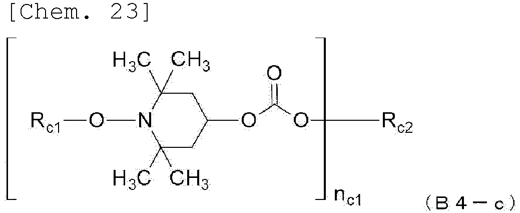
wherein R_{c1} represents an alkyl group or a hydroxyalkyl group in which the number of carbon atoms is 1 to 30, or an alkenyl group in which the number of carbon atoms is 2 to 30, and n_{c1} represents an integer of 1 to 6,
wherein when n_{c1} = 1, then R_{c2} represents an alkyl group in which the number of carbon atoms is 1 to 22, an alkenyl group in which the number of carbon atoms is 2 to 22 or a group of the following general formula (B4-c-i): 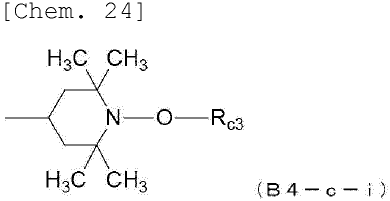
wherein R_{c3} represents an alkyl group or a hydroxyalkyl group in which the number of carbon atoms is 1 to 30, or an alkenyl group in which the number of carbon atoms is 2 to 30, and
wherein when n_{c1} = 2 to 6, then R_{c2} represents an n_{c1}-valent organic group in which the number of carbon atoms is 2 to 20.

### (Item 13)

The flame retardant composition according to item 12, wherein the component (B) is selected from the group consisting of the following formulas (i), (ii) and (iii): 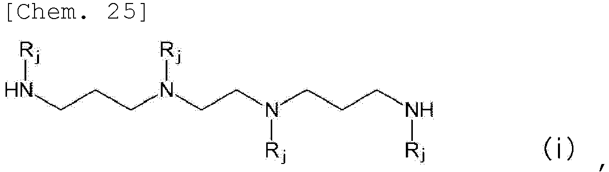 wherein in the formula (i), Rⱼ are each independently a hydrogen atom or the following organic group, with the proviso that at least one Rⱼ is the following organic group: 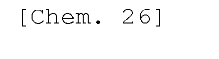 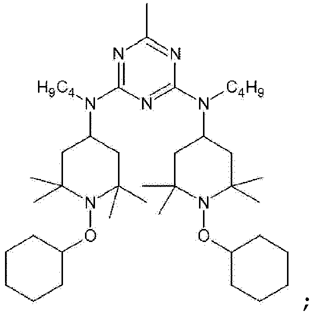 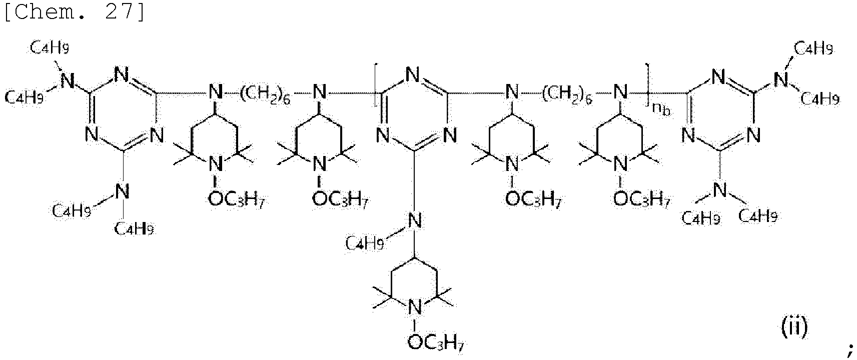 and 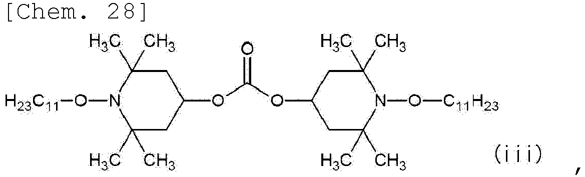 wherein, in the formula (ii), n_{b} is an integer of 1 to 10.

### (Item 14)

The flame retardant composition according to item 11, wherein, in the formula (B3), R_{B5} is substituted with at least one hydroxyl group.

### (Item 15)

The flame retardant composition according to any one of items 1 to 14, further comprising a triazine-based compound (component (C)) having a 1,3,5-triazine structure or a 1,3,5-triazine fused ring structure.

### (Item 16)

The flame retardant composition according to item 15, wherein the component (C) is a cyanurate salt of an amine compound having a 1,3,5-triazine structure or a 1,3,5-triazine fused ring structure.

### (Item 17)

A flame retardant thermoplastic resin composition, which comprises the flame retardant composition according to any one of items 1 to 16 and a thermoplastic resin (component (D)).

### (Item 18)

The flame retardant thermoplastic resin composition according to item 17, wherein the thermoplastic resin (component (D)) is a polyolefin resin.

### (Item 19)

The flame retardant thermoplastic resin composition according to item 18, wherein the polyolefin resin is polypropylene, polyethylene, or a copolymer comprising propylene or ethylene.

### (Item 20)

The flame retardant thermoplastic resin composition according to any one of items 17 to 19, which comprises the flame retardant composition according to item 15 and a thermoplastic resin (component (D)).

### [Effect of invention]

In accordance with the present invention, a flame retardant thermoplastic resin composition which has a high flame retardant effect and causes a low level of bleed-out and a flame retardant composition which can provide the above-described functions are provided.

### [Embodiments for Carrying Out the Invention]

The present invention provides a flame retardant composition and a flame retardant thermoplastic resin composition.

The flame retardant composition of the present invention comprises a phosphoramidate compound (component (A)) and a hindered amine compound (component (B)). Optionally, the flame retardant composition of the present invention further comprises a compound having a 1,3,5-triazine structure or 1,3,5-triazine fused ring structure (component (C)).

The flame retardant thermoplastic resin composition of the present invention comprises a phosphoramidate compound (component (A)), a hindered amine compound (component (B)) and thermoplastic resin (component (D)). Optionally, the flame retardant composition of the present invention further comprises a compound having a 1,3,5-triazine structure or 1,3,5-triazine fused ring structure (component (C)).

### <Component (A)>

As component (A), the composition of the present invention uses a phosphoramidate compound. The phosphoramidate compound of component (A) consists of the phosphoramidate compound represented by the general formula (I): 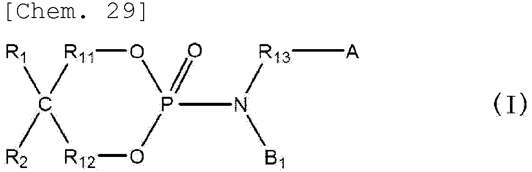
wherein R₁ and R₂ are each independently a hydrogen atom or an alkyl group in which the number of carbon atoms is 1 to 3, R₁₁ and R₁₂ are each independently an alkylene group in which the number of carbon atoms is 1 to 3, R₁₃ is an alkylene group in which the number of carbon atoms is 1 to 6, B₁ is a hydrogen atom or an alkyl group in which the number of carbon atoms is 1 to 6, and A is a hydrogen atom or an organic group represented by general formula (II): 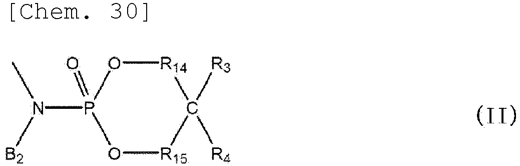
wherein R₃ and R₄ are each independently a hydrogen atom or an alkyl group in which the number of carbon atoms is 1 to 3, R₁₄ and R₁₅ are each independently an alkylene group in which the number of carbon atoms is 1 to 3, and B₂ is a hydrogen atom or an alkyl group in which the number of carbon atoms is 1 to 6, and
wherein when A is a hydrogen atom and B₁ is an alkyl group in which the number of carbon atoms is 1 to 6, then B₁ and R₁₃-A may be bound to form a nitrogen-containing heterocycle with the nitrogen atom to which they are bound, and
when A is an organic group represented by the general formula (II), B₂ is an alkyl group in which the number of carbon atoms is 1 to 6, and B₁ is an alkyl group in which the number of carbon atoms is 1 to 6, then B₁ and B₂ may be bound to form a nitrogen-containing heterocycle with the nitrogen atom to which they are bound and R₁₃.

It should be noted that an "alkyl group" in the present specification refers to a monovalent group resulting from loss of one hydrogen atom from a chain or cyclic aliphatic hydrocarbon (alkane). In the cases of chain alkyl, the alkyl group is generally represented by cₖH₂ₖ₊₁- (wherein k is a positive integer). A chain alkyl group may be a straight chain or a branched chain. A cyclic alkyl group may consist of a cyclic structure, or may have a structure in which a chain alkyl group is further linked to the cyclic structure. An "alkylene group" in the present specification refers to a divalent group resulting from loss of one more hydrogen atom from an alkyl group. For example, an "ethylene group" refers to a divalent group resulting from loss of one more hydrogen atom from an ethyl group.

Examples of the alkyl group in which the number of carbon atoms is 1 to 3 in the general formulas (I) and (II), include a methyl group, an ethyl group, an n-propyl group and an isopropyl group. Among these groups, a methyl group and an ethyl group are preferable. From the viewpoint of flame retardance, a methyl group is particularly preferable. Examples of the alkylene group in which the number of carbon atoms is 1 to 3 include a methylene group, an ethylene group, an n-propylene group and a 1,2-propylene group. Among these, a methylene group and an ethylene group are preferable, and from the viewpoint of flame retardance, a methylene group is particularly preferable.

Examples of the alkyl group in which the number of carbon atoms is 1 to 6 include a methyl group, an ethyl group, an n-propyl group, an isopropyl group, an n-butyl group, an isobutyl group, a tert-butyl group, an n-pentyl group, and an n-hexyl group. Among these, a methyl group and an ethyl group are preferable. From the viewpoint of the flame retardance, a methyl group is particularly preferable. Examples of the alkylene group in which the number of carbon atoms is 1 to 6 include a methylene group, an ethylene group, an n-propylene group and a 1,2-propylene group, an n-butylene group, a 1,1-dimethylethylene group, an n-pentylene group, and an n-hexylene group. Among these, a methylene group, an ethylene group, an n-propylene group, a 1,2-propylene group, an n-butylene group and a 1,1-dimethylethylene group are preferable. From the viewpoint of the flame retardance, a methylene group and an ethylene group are preferable, and an ethylene group is particularly preferable.

When A is a hydrogen atom, an aliphatic nitrogen-containing heterocycle formed by binding of B₁ and R₁₃ is a 3-to 13-membered, preferably 4- to 8-membered, more preferably 6-membered heterocycle containing one nitrogen atom.

A nitrogen-containing heterocycle that may be formed when A is an organic group represented by the general formula (II) is a 5-membered to 20-membered, preferably 5-membered to 8-membered, more preferably 6-membered or 7-membered, further preferably 6-membered heterocycle containing two nitrogen atoms.

Examples of phosphoramidate compounds represented by the general formula (I) include:
a compound represented by general formula (III) where B₁ is an alkyl group in which the number of carbon atoms is 1 to 6, A is a hydrogen atom, B₁ and R₁₃-A are bound to form a nitrogen-containing heterocycle with the nitrogen atom to which they are bound, 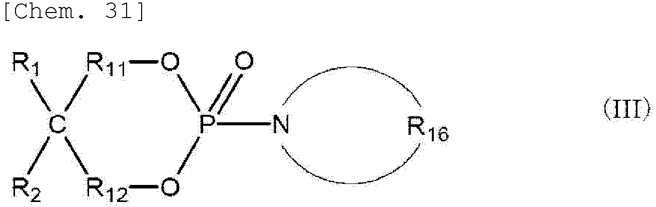
wherein R₁, R₂, R₁₁, and R₁₂ are the same as the definitions in the general formula (I), and R₁₆ is an alkylene group in which the number of carbon atoms is 2 to 12;
a compound represented by general formula (IV) where A is an organic group represented by the general formula (II), B₁ and B₂ are each independently a hydrogen atom or an alkyl group in which the number of carbon atoms is 1 to 6: 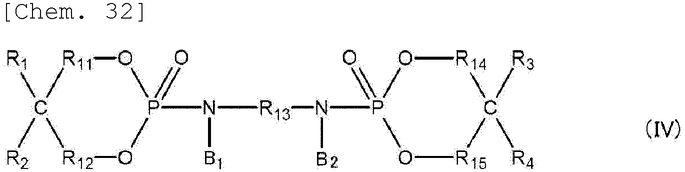
wherein R₁, R₂, R₁₁, R₁₂, and R₁₃ are the same as the definitions in the general formula (I), R₃, R₄, R₁₄, and R₁₅ are the same as the definitions in the general formula (II), and B₁ and B₂ are each independently a hydrogen atom or an alkyl group in which the number of carbon atoms is 1 to 6; and
a compound represented by general formula (V) where B₁ is an alkyl group in which the number of carbon atoms is 1 to 6, A is an organic group represented by the general formula (II), B₂ is an alkyl group in which the number of carbon atoms is 1 to 6, B₁ and B₂ are bound to form a nitrogen-containing heterocycle with the nitrogen atom to which they are bound and R₁₃ : 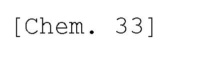 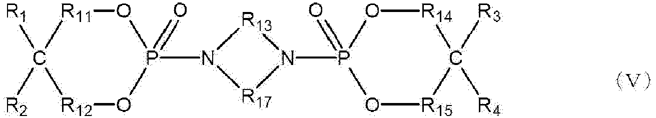
wherein the definitions of R₁, R₂, R₁₁, R₁₂, and R₁₃ are the same as the definitions in relation to the general formula (I), the definitions of R₃, R₄, R₁₄, and R₁₅ are the same as the definitions in relation to the general formula (II), and R₁₇ is an alkylene group in which the number of carbon atoms is 2 to 12.

Examples of compounds represented by the general formula (III) include compounds of the following formulas (1) to (3).

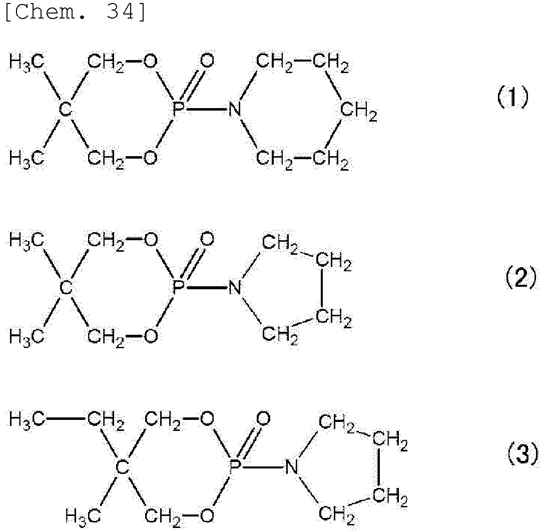

Examples of compounds represented by the general formula (IV) include compounds of the following formulas (4) to (9).

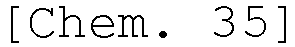

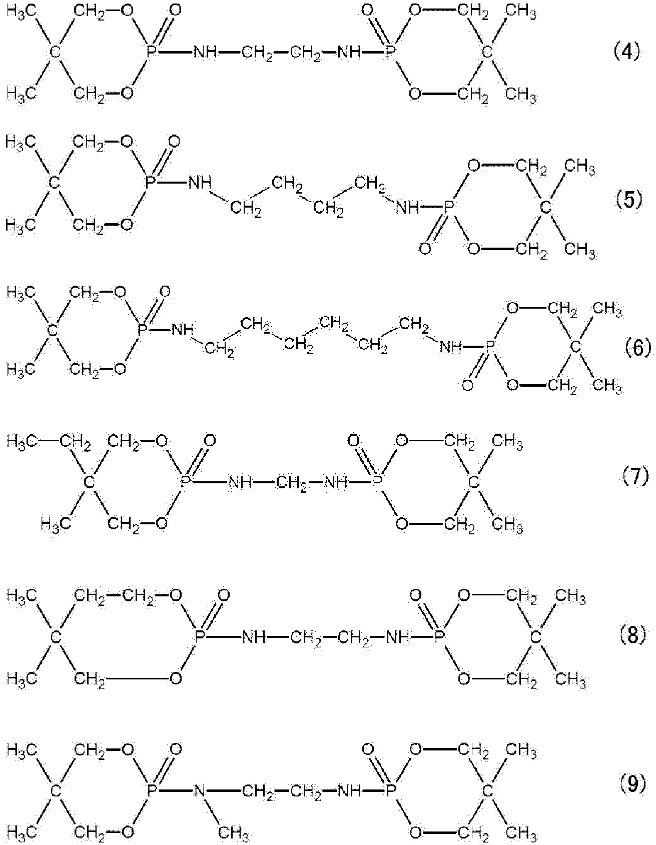

Examples of compounds represented by the general formula (V) include compounds of the following formulas (10) to (14).

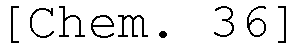

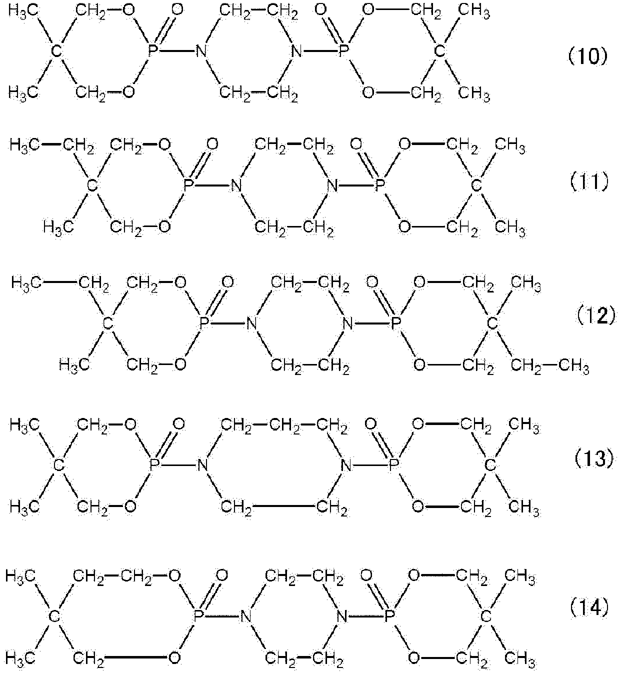

Among the phosphoramidate compounds represented by the general formula (I), a compound in which R₁ and R₂ are methyl groups and R₁₁ and R₁₂ are methylene groups is preferable from the viewpoint of flame retardance.

A in the general formula (I) is preferably an organic group represented by the general formula (II). From the viewpoint of flame retardance, it is preferable that R₃ and R₄ are methyl groups and R₁₄ and R₁₅ are methylene groups.

Regarding R₁₃ of the general formula (I), the number of carbon atoms is 1 to 6. From the viewpoint of flame retardance, the number of carbon atoms is preferably 1 to 5, more preferably 1 to 4, and further preferably 1 to 2.

When A of the general formula (I) is an organic group represented by the general formula (II), if B₁ of the general formula (I) and B₂ of the general formula (II) are not bound, B₁ and B₂ are preferably both hydrogen atom from the viewpoint of flame retardance. If B₁ and B₂ are bound, it is preferable that B₁ and B₂ are taken together to form an ethylene group or a propylene group. It is more preferable that B₁ and B₂ are taken together to form an ethylene group. In addition, it is preferable that they are taken together to form a 5-membered to 8-membered nitrogen-containing heterocycle with the nitrogen atom to which they are bound and R₁₃, more preferably to form a 6-membered to 7-membered nitrogen-containing heterocycle, and further preferably to form a 6-membered nitrogen-containing heterocycle.

When A in the general formula (I) is an organic group represented by the general formula (II), it is preferable that R₁ and R₂ as well as R₁₁ and R₁₂ of the general formula (I) are the same as R₃ and R₄ as well as R₁₄ and R₁₅ of the general formula (II), respectively. That is, it is preferable that the two phosphorus-containing ring structures are the same. If the two phosphorus-containing ring structures are the same, it has the advantage in that it is easy to synthesize such a compound.

Among the compounds of the above-described formulas (1) to (14), examples of preferable compounds include compounds of formulas (1), (4) to (7), (10) and (12). Compounds of the formulas (1), (4) to (6) and (10) are more preferable and compounds of the formulas (4) to (6) and (10) are further preferable.

A method of synthesizing the phosphoramidate compound represented by the general formula (I) is not particularly limited. A known synthesis method of a phosphoramidate compound represented by the general formula (I) may be used without a change. For example, it may be synthesized according to the method described in U.S. Patent Application Laid-open Publication No. 2016/0244582. In addition, the known synthetic method may also be appropriately modified. Therefore, a phosphoramidate compound represented by the general formula (I) can be synthesized by applying various reactions known for the synthesis of a phosphoramidate compound.

When the flame retardant composition or the flame retardant thermoplastic resin composition of the present invention is prepared, it is preferable to make particles of the phosphoramidate compound of component (A) having a small particle diameter and use the small particles in the preparation. If the particle diameter is small, then it is made easy to uniformly disperse the phosphoramidate compound into a thermoplastic resin. Specifically, an average particle diameter of particles of the phosphoramidate compound is preferably 50 µm or lower, and further preferably the average particle diameter is 20 µm or lower. The lower limit of the average particle diameter is not particularly limited. However, for example, those wherein the average particle diameter is 0.1 µm or more, or 1 µm or more can be used. When particles having a very small average particle diameter are produced, a cost for producing the particles may be expensive. A method for measuring a particle diameter is not particularly limited. For example, a laser diffraction particle diameter distribution measurement device (SALD (registered trade mark)-2300 made by Shimadzu Corporation) can be used.

### <Component (B)>

In the composition of the present invention, as component (B), a hindered amine compound is used.

In the present specification, a hindered amine compound refers to an organic compound which has a nitrogen atom bound to a carbon atom wherein there is a substituent near the nitrogen atom which provides steric hindrance.

A hindered amine compound has a property wherein it is possible to capture a radical. Therefore, a hindered amine compound is generally used as an antioxidant or light stabilizer. Such a hindered amine compound which is used as an antioxidant or a light stabilizer can be used in the present invention.

The hindered amine compound may be a primary amine, a secondary amine, a tertiary amine, or a quaternary amine. The hindered amine compound is preferably a secondary amine or a tertiary amine. That is, it is preferable that two or three of the three valences of the nitrogen atom in the hindered amine compound are used for bonds to carbon atoms.

Regarding a specific chemical structure, it is preferable that the hindered amine compound has a structure in which one nitrogen atom is sandwiched between two carbon atoms. In addition, it is preferable that in the hindered amine compound, the nitrogen atom is bonded to an oxygen atom. In one embodiment, the nitrogen atom in the hindered amine compound is bonded to two carbon atoms and one oxygen atom. It is preferable that the oxygen atom is further bound to a carbon atom.

In one preferable embodiment, the nitrogen atom in the hindered amine compound has three single bonds between the nitrogen atom and three adjacent atoms. In this case, the hindered amine compound is represented by the following formula (B1).

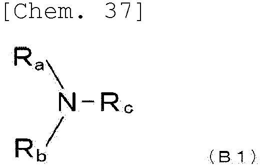

In this formula, Rₐ, R_{b} and R_{c} are each independently any organic groups. If necessary, Rₐ and R_{b} may be bound to form a ring structure which consists of Rₐ, R_{b} and the nitrogen atom.

Specific examples of the hindered amine compound of formula (B1) include, for example, Tinuvin144, PA144, 249, 292, 494AR, 622SF, 765, 770DF, 783FDL, XT833, 5050, 5060, 5100, 5151 (made by BASF), Chimassorb119, 944FDL, 944LD, 2020FDL (made by BASF), Adekastab LA-52, LA-57, LA-63, LA-68, LA-77Y, LA-82, LA-87, and LA-94 (made by ADEKA).

In one embodiment, two of the three single bonds are bonds to the carbon atoms of the hydrocarbon and one is a bond to an oxygen atom. It is preferable that this oxygen atom is further bound to a carbon atom. In this regard, the structure in which the nitrogen atom is bound to an oxygen atom and the oxygen atom is bound to a carbon atom is referred to as an NOR-type structure. In this case, the hindered amine compound is represented by the following formula (B2).

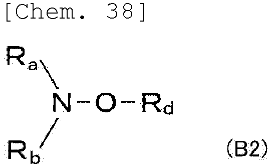

In the formula, R_{d} is any organic group. It should be noted that again, if necessary, Rₐ and R_{b} may be bound to form a ring structure which consists of Rₐ, R_{b} and the nitrogen atom.

In the above formulas (B1) or (B2), when Rₐ and R_{b} are bound to form a ring structure, it is preferable that the ring structure has such a size that the ring structure is stable. For example, a 5- to 7-membered ring is preferable, and a 6-membered ring is most preferable. When Rₐ and R_{b} are bound to form a ring structure, then the atoms which constitute the ring formed by binding Rₐ and R_{b} are preferably a nitrogen atom, carbon atom or oxygen atom, and are more preferably a nitrogen atom or carbon atom. In one preferable embodiment, one nitrogen atom and four to six carbon atoms form a 5- to 7-member ring.

In one preferable embodiment, the hindered amine compound is an NOR-type hindered amine compound, which has a structure in which a nitrogen atom is bound to an oxygen atom, and the oxygen atom is further bound to an organic group (for example, an aliphatic or aromatic hydrocarbon group). Examples of an aliphatic hydrocarbon group include, for example, alkyl and alkenyl. The alkyl may be chain alkyl or cycloalkyl. The chain alkyl may be straight chain alkyl or branched chain alkyl. A number of the carbon atoms of the chain alkyl is preferably 1 to 30, more preferably 2 to 15, and further preferably 3 to 14. The chain alkyl may be substituted with at least one hydroxyl group. A number of carbon atoms of the cycloalkyl is preferably 5 to 18, more preferably 5 to 7, and further preferably 6. The cycloalkyl may be substituted with at least one hydroxyl group. The alkenyl may be chain alkenyl or cycloalkenyl. The chain alkenyl may be straight chain alkenyl or branched chain alkenyl. A number of carbon atoms of the chain alkenyl is preferably 2 to 30. The chain alkenyl may be substituted with at least one hydroxyl group. A number of carbon atoms of the cycloalkenyl is preferably 5 to 18, more preferably 5 to 7, and further preferably 6. The cycloalkenyl may be substituted with at least one hydroxyl group. Examples of an aromatic hydrocarbon group include, for example, aryl or arylalkyl. The aryl is preferably phenyl. The aryl may be substituted with at least one hydroxyl group. The arylalkyl is preferably phenylalkyl, and a number of carbon atoms thereof is preferably 7 to 15. The arylalkyl may be substituted with at least one hydroxyl group.

In one preferable embodiment, the hindered amine compound has a piperidine structure. In the present specification, a piperidine structure refers to a saturated 6-membered ring structure which consists of five carbon atoms and one nitrogen atom. The nitrogen atom in the piperidine structure is preferably bound to an oxygen atom. Further the oxygen atom is preferably bound to an aliphatic or aromatic hydrocarbon group. The hindered amine compound may have one piperidine structure, two piperidine structures or three or more piperidine structures in one molecule. A hindered amine compound which has a plurality of piperidine structures is referred to as an oligomeric or polymeric hindered amine compound.

In one preferable embodiment, the hindered amine compound has the structure of the following formula (B3):

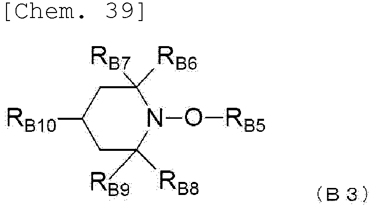

R_{B5} is a straight chain or branched chain alkyl group in which the number of carbon atoms is 1 to 30, a straight chain or branched chain alkenyl group in which the number of carbon atoms is 2 to 30, a cycloalkyl group in which the number of carbon atoms is 5 to 18, a cycloalkenyl group in which the number of carbon atoms is 5 to 18, or a straight chain or branched chain alkyl group substituted with a phenyl group in which the number of carbon atoms in the alkyl group is 1 to 4. In this regard, R_{B5} may be substituted with at least one hydroxyl group.

R_{B6}, R_{B7}, R_{B8}, and R_{B9} are each independently a straight chain or branched chain alkyl group in which the number of carbon atoms is 1 to 4.

R_{B10} is any organic group, and in one embodiment, it is a monovalent organic group. In one embodiment, it is a divalent or higher-valent organic group.

In one embodiment, a hindered amine compound in which R_{B5} in the above-described formula (B3) is substituted with at least one hydroxyl group can be used in the present invention. This compound is described in the publication of Japanese Laid-open Publication No. 2000-302758.

Specific examples of the hindered amine compound of formula (B3) include, for example, Tinuvin 123, 152 (made by BASF), XT55FB, XT100, XT200, XT847, XT850, and XT855 (made by BASF).

In one embodiment, the hindered amine compound has a plurality of piperidine structures. For example, a compound which has 2 to 32 piperidine structures in one molecule can be used in the present invention.

The compound having a plurality of piperidine structures has a relatively large molecular weight, and has an advantage in that the hindered amine compound is not easily separated from a polyolefin resin. However, when the molecular weight is too large, then there may be a case where it is difficult to homogeneously mix it with a resin.

In one embodiment, the hindered amine compound of the following formula (B4-a) can be used in the present invention.

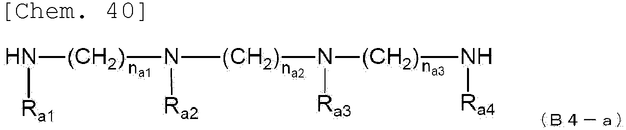

nₐ₁, nₐ₂, and nₐ₃ in the formula (B4-a) are each independently any integer, and in one preferable embodiment, they are each independently an integer of 1 to 4. Rₐ₁ to Rₐ₄ are each independently a hydrogen atom or an organic group of the following formula (B4-a-i), with the proviso that at least one of Rₐ₁ to Rₐ₄ is an organic group of the following formula (B4-a-i). It is preferable that Rₐ₁, Rₐ₂, and Rₐ₃ are an organic group of the following formula (B4-a-i), or Rₐ₁, Rₐ₂, and Rₐ₄ are an organic group of the following formula (B4-a-i). In one embodiment, all of Rₐ₁ to Rₐ₄ are organic groups of the following formula (B4-a-i).

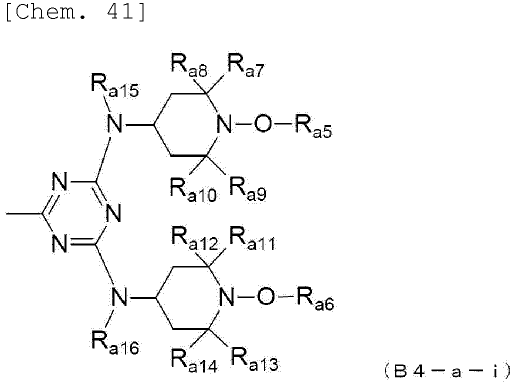

Rₐ₅ and Rₐ₆ in the formula (B4-a-i) are each independently any organic group, and in one preferable embodiment, each independently has the same meaning as the above-described meaning of R_{B5}.

Rₐ₇, Rₐ₈, Rₐ₉ and Rₐ₁₀ are each independently any organic group, and in one preferable embodiment, each independently has the same meaning as the above-described meaning of R_{B6}, R_{B7}, R_{B8}, and R_{B9}.

Rₐ₁₁, Rₐ₁₂, Rₐ₁₃ and Rₐ₁₄ are each independently any organic group, and in one preferable embodiment, each independently has the same meaning as the above-described meaning of R_{B6}, R_{B7}, R_{B8}, and R_{B9}.

Rₐ₁₅ and Rₐ₁₆ are a hydrogen atom, a straight chain or branched chain alkyl group in which the number of carbon atoms is 1 to 12 or a straight chain or branched chain alkenyl group in which the number of carbon atoms is 2 to 12.

Specific examples of compounds of the above-described formula (B4-a) include, for example, N,N',N"-tris{2,4-bis[(1-cyclohexyloxy-2,2,6,6-tetramethylpiperidin-4-yl)n-butylamino]-sym-triazine-6-yl}-3,3'-ethylenediiminodipropylamine, N,N',N"-tris{2,4-bis[(1-octyloxy-2,2,6,6-tetramethylpiperidin-4-yl)n-butylamino]-sym-triazin-6-yl}-3,3'-ethylenediiminodipropylamine, N,N',N"-tris{2,4-bis[(1-methoxy-2,2,6,6-tetramethylpiperidin-4-yl)n-butylamino]-sym-triazin-6-yl}-3,3'-ethylenediiminodipropylamine.

Specific examples of the hindered amine compound of formula (B4-a) include, for example, Flamestab NOR116 (made by BASF).

In one embodiment, regarding the hindered amine compound, a compound represented by the following formula (B4-b) can be used in the present invention.

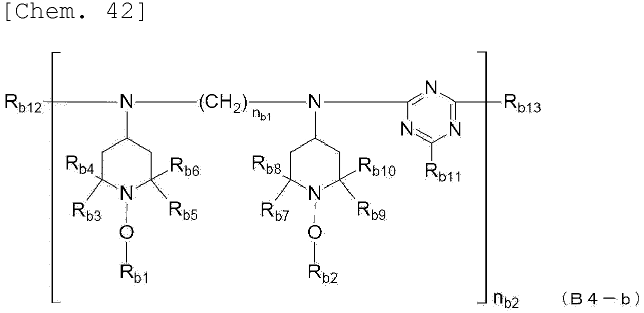

In the formula (B4-b), n_{b1} is any integer, and in one preferable embodiment, it is an integer of 2 to 8.

n_{b2} is any integer, and in one preferable embodiment, it is an integer of 1 to 10.

R_{b1} and R_{b2} are each independently any organic group, and in one preferable embodiment, each independently has the same meaning as the above-described meaning of R_{B5}.

R_{b3}, R_{b4}, R_{b5} and R_{b6} are each independently any organic group, and in one preferable embodiment, each independently has the same meaning as the above-described meaning of R_{B6}, R_{B7}, R_{B8}, and R_{B9}.

R_{b7}, R_{b8}, R_{b9} and R_{b10} are each independently any organic group, and in one preferable embodiment, each independently has the same meaning as the above-described meaning of R_{B6}, R_{B7}, R_{B8}, and R_{B9}.

R_{b11} is any organic group, and in one preferable embodiment, it is a nitrogen-containing substituent T₁ of the following formula (B4-b-i):

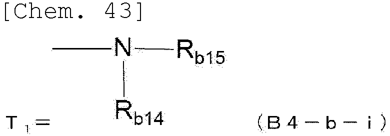

In the formula (B4-b-i), R_{b14} and R_{b15} are each independently any organic group, and in one preferable embodiment, they are each independently a hydrogen atom, a straight chain or branched chain alkyl group in which the number of carbon atoms is 1 to 8 or a substituent T₂ of the following formula (B4-b-ii):

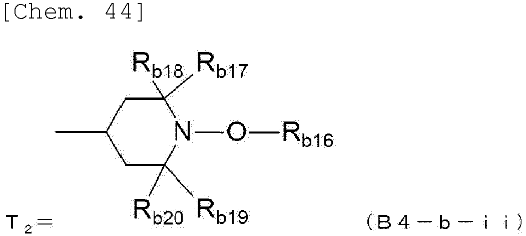

In the formula (B4-b-ii), R_{b16} is any organic group, and in one preferable embodiment, it has the same meaning as the above-described meaning of R_{B5}.

R_{b17}, R_{b18}, R_{b19} and R_{b20} are each independently any organic group, and in one preferable embodiment, each independently has the same meaning as the above-described meaning of R_{B6}, R_{B7}, R_{B8}, and R_{B9}.

In this regard, R_{b14} and R_{b15} may be bound to form a morpholino group, piperidino group or 1-piperazinyl group with the nitrogen atom to which they are bound.

R_{b12} is any organic group, and in one preferable embodiment, it is a hydrogen atom, a straight chain or branched chain acyl group in which the number of carbon atoms is 2 to 4, a carbamoyl group substituted with a straight chain or branched chain alkyl group in which the number of carbon atoms is 2 to 4, or a substituent T₃ of the following formula (B4-b-iii):

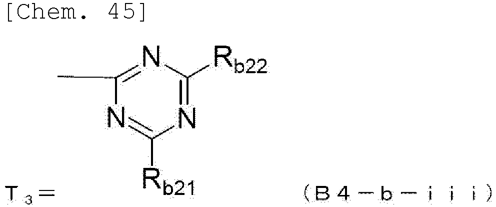

R_{b21} and R_{b22} in the formula (B4-b-ii) are each independently any organic group, and in one preferable embodiment, each independently has the same meaning as the above-described meaning of substituent R_{b14}.

R_{b13} is any organic group, and in one preferable embodiment, it is a nitrogen-containing substituent T₄ of the following formula (B4-b-iv) or a substituent T₅ of the following formula (B4-b-v) :

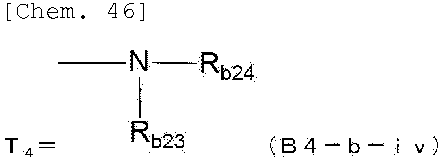

R_{b23} and R_{b24} in the formula (B4-b-iv) are each independently any organic group, and in one preferable embodiment, they are each independently a hydrogen atom, a straight chain or branched chain alkyl group in which the number of carbon atoms is 1 to 8, or the above-described substituent T₂.

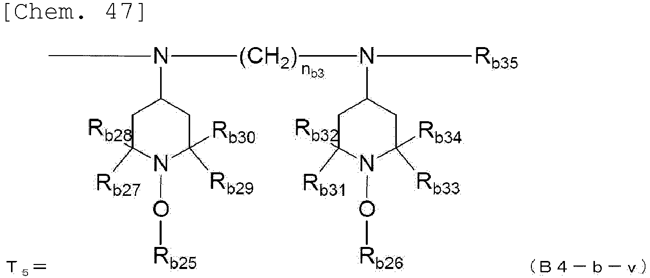

In the formula (B4-b-v), n_{b3} is any integer, and in one preferable embodiment, it is an integer of 2 to 8.

R_{b25} and R_{b26} are each independently any organic group, and in one preferable embodiment, they each independently have the same meaning as the above-described meaning of R_{B5}.

R_{b27}, R_{b28}, R_{b29} and R_{b30} are each independently any organic group, and in one preferable embodiment, they each independently have the same meaning as the above-described meaning of R_{B6}, R_{B7}, R_{B8}, and R_{B9}.

R_{b31}, R_{b32}, R_{b33} and R_{b34} are each independently any organic group, and in one preferable embodiment, they each independently have the same meaning as the above-described meaning of R_{B6}, R_{B7}, R_{B8}, and R_{B9}.

R_{b35} is any organic group, and in one preferable embodiment, it is a hydrogen atom, a straight chain or branched chain acyl group in which the number of carbon atoms is 2 to 4, a carbamoyl group substituted with a straight chain or branched chain alkyl group in which the number of carbon atoms in the alkyl group is 2 to 4, or substituent T₆ of the following formula (B4-b-vi).

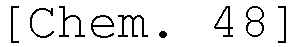

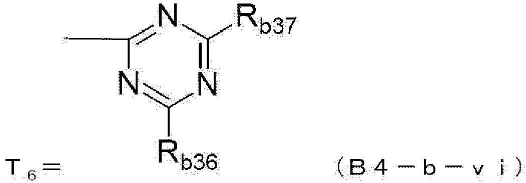

R_{b36} and R_{b37} in the formula (B4-b-vi) are each independently any organic group, and in one preferable embodiment, they are each independently a hydrogen atom or a straight chain or branched chain alkyl group in which the number of carbon atoms is 1 to 18.

Specific examples of the hindered amine compound of the formula (B4-b) include, for example, Tinuvin371 (made by BASF).

In one embodiment, the hindered amine compound may be a compound which has a carbonate bond (-O-C(=O)-O-).

Specifically, for example, the hindered amine compound may be a compound represented by the following general formula (B4-c) : 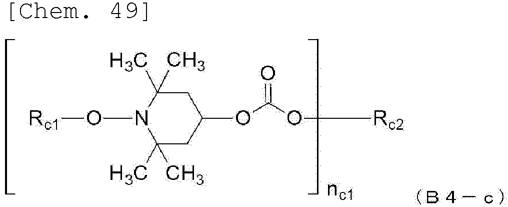
wherein R_{c1} represents an alkyl group or a hydroxyalkyl group in which the number of carbon atoms is 1 to 30, or an alkenyl group in which the number of carbon atoms is 2 to 30, and n_{c1} represents an integer of 1 to 6,
wherein when n_{c1} = 1, then R_{c2} represents an alkyl group in which the number of carbon atoms is 1 to 22, an alkenyl group in which the number of carbon atoms is 2 to 22 or a group of the following general formula (B4-c-i): 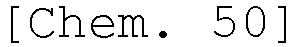 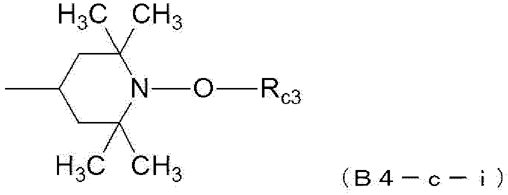
wherein R_{c3} represents an alkyl group or hydroxyalkyl group in which the number of carbon atoms is 1 to 30, or an alkenyl group in which the number of carbon atoms is 2 to 30, and
wherein when n_{c1} = 2 to 6, then R_{c2} represents an n_{c1}-valent organic group in which the number of carbon atoms is 2 to 20.

Specific examples of the hindered amine compound of formula (B4-c) include, for example, Adekastab LA-81 (made by ADEKA).

The hindered amine compound which is used in the present invention may have, in the molecule, a 1,3,5-triazine structure or 1,3,5-triazine fused ring structure, which is described later in relation to the compound of component (C). In one preferable embodiment, the hindered amine compound does not have a 1,3,5-triazine structure or 1,3,5-triazine fused ring structure in the molecule.

It should be noted that in the present specification, a compound which has both a structure of the hindered amine and a 1,3,5-triazine structure or 1,3,5-triazine fused ring structure in one molecule is included in the hindered amine compound of component (B).

### <Component (C)>

In the composition of the present invention, optionally, as component (C), a triazine-based compound which has a 1,3,5-triazine structure or 1,3,5-triazine fused ring structure can be used.

It should be noted that in the present specification, a compound which has both a structure of the hindered amine and a 1,3,5-triazine structure or 1,3,5-triazine fused ring structure in one molecule is encompassed in component (B) and is not encompassed in component (C). That is, in the present specification, a triazine-based compound refers to a compound which does not have a structure of the above-described hindered amine.

The 1,3,5-triazine structure is a 6-membered ring structure consisting of three carbon atoms and three nitrogen atoms.

In the present specification, the 1,3,5-triazine fused ring means a fused ring formed by fusing a plurality of 1,3,5-triazine rings. In the present specification, a 1,3,5-triazine fused ring structure means a structure of a fused ring formed by fusing a plurality of 1,3,5-triazine rings.

The compound of component (C) may be a compound having one 1,3,5-triazine structure, or may be a compound having a plurality of 1,3,5-triazine structures. Specifically, the compound having one 1,3,5-triazine structure is a compound represented by the following general formula (C1).

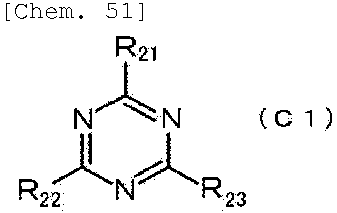

In the above-described formula (C1), R₂₁, R₂₂ and R₂₃ are each independently a hydrogen atom or any monovalent substituent. Preferably, at least one of R₂₁, R₂₂ and R₂₃ is other than a hydrogen atom. More preferably, at least one of R₂₁, R₂₂ and R₂₃ is an amino group or a substituted amino group. Further preferably, R₂₁, R₂₂ and R₂₃ are each independently an amino group or a substituted amino group. Particularly preferably, R₂₁, R₂₂ and R₂₃ are each an amino group.

The above-described any monovalent substituent is preferably an alkyl group in which the number of carbon atoms is 1 to 12, an aryl group in which the number of carbon atoms is 6 to 10, an alkyl group having a carbon-carbon unsaturated bond in which the number of carbon atoms is 1 to 12, an alkylcarbonyl group in which the number of carbon atoms is 1 to 12, a hydroxyl group, an alkoxy group in which the number of carbon atoms is 1 to 12, or a mercapto group.

The above-described substituted amino group represents an amino group in which at least one of the hydrogen atoms bonded to the nitrogen atom in the amino group is substituted with any monovalent substituent. Preferably, it is a substituted amino group which is substituted with an alkyl group in which the number of carbon atoms is 1 to 12, an aryl group in which the number of carbon atoms is 6 to 10, an alkyl group having an unsaturated carbon-carbon bond in which the number of carbon atoms is 1 to 12, or an alkylcarbonyl group in which the number of carbon atoms is 1 to 12.

In the compound of component (C), an amine compound having a 1,3,5-triazine structure refers to a compound having a 1,3,5-triazine ring structure and an amino group. Examples of the amine compound having a 1,3,5-triazine structure are, for example, compounds in which at least one of R₂₁, R₂₂ and R₂₃ in the above-described formula (C1) is an amino group or a substituted amino group. Alternatively, it may be a compound in which at least one of R₂₁, R₂₂ and R₂₃ comprises an amino group or a substituted amino group. For example, it may be a compound in which at least one of R₂₁, R₂₂ and R₂₃ is an aminoalkyl group. Preferably, each of R₂₁, R₂₂ and R₂₃ is independently an amino group or a substituted amino group. More preferably, each of R₂₁, R₂₂ and R₂₃ is an amino group.

The compound having the structure of the above-described formula (C1) may be a salt. For example, a salt of melamine can be used. As a type of the salt, for example, an acid addition salt in which an acidic compound is added to a basic nitrogen in the compound (for example, a melamine cyanurate, melamine phosphate, melamine pyrophosphate (a salt in which the molar ratio of "pyrophosphoric acid : melamine" is 1:1)) are included. As the acid addition salt, it is preferably a cyanurate salt.

Among the salts of the compounds having the structure of the above-described formula (C1), preferable salts are a cyanurate salt, phosphate salt or pyrophosphate salt of the compounds of the above-described formula (C1). More preferably, the salt is a cyanurate salt of melamine.

In one preferable embodiment, one, two or three of R₂₁, R₂₂ and R₂₃ of the amine compound having a 1,3,5-triazine ring structure of the above-described formula (C1) are amino groups, and at least one of the amino groups forms a salt with an acidic compound (e.g., a compound having a phosphoric acid group). Also from this viewpoint that an amino group forms a salt with an acidic compound, a cyanurate salt, a phosphate salt and a pyrophosphate salt of melamine are preferable.

It should be noted that in the present specification, a cyanurate salt refers to a salt of cyanuric acid and a triazine-based compound of component (C), and the molar ratio of "cyanuric acid : a triazine-based compound" is not particularly limited. That is, it may be a salt in which only one molecule of a triazine-based compound is bound to one cyanuric acid molecule, or it may be a salt in which a plurality of triazine-based compound molecules are bound to cyanuric acid. In addition, it may be a salt in which only one molecule of triazine-based compound is bound to plural cyanuric acid molecules. Preferably, the molar ratio of "cyanuric acid : a triazine-based compound" is 1:1.

In the present specification, a melamine cyanurate refers to a salt of cyanuric acid and melamine, and the molar ratio of "cyanuric acid : melamine" is not particularly limited. That is, it may be a salt in which only one molecule of melamine is bound to one molecule of cyanuric acid, or it may be a salt in which plural melamine molecules are bound to one molecule of cyanuric acid. In addition, it may be a salt in which only one melamine molecule is bound to plural molecules of cyanuric acid. Preferably, the molar ratio of "cyanuric acid : melamine" is 1:1.

The compound having a plurality of 1,3,5-triazine structures may be a compound in which at least one of R₂₁ to R₂₃ in the above-described formula (C1) has a 1,3,5-triazine structure. That is, it may be a compound having a structure in which a plurality of 1,3,5-triazine structures are connected (for example, melam).

The 1,3,5-triazine fused ring is formed, for example, by deammonia condensation of melamine. Examples of the compound having a 1,3,5-triazine fused ring structure include, for example, a compound represented by the following general formula (C2).

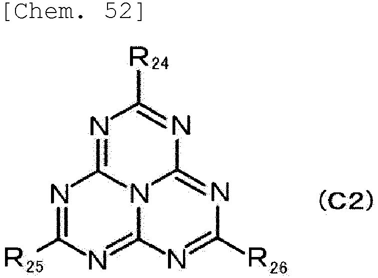

In the above-described formula (C2), R₂₄, R₂₅ and R₂₆ may be independently a hydrogen atom or any monovalent substituent. Preferably, at least one of R₂₄, R₂₅ and R₂₆ is other than a hydrogen atom. More preferably, at least one of R₂₄, R₂₅ and R₂₆ is an amino group or a substituted amino group. More preferably, R₂₄, R₂₅ and R₂₆ are each independently an amino group or a substituted amino group. Particularly preferably, each of R₂₄, R₂₅ and R₂₆ is an amino group.

The above-described any monovalent substituent is preferably an alkyl group in which the number of carbon atoms is 1 to 12, an aryl group in which the number of carbon atoms is 6 to 10, an alkyl group having an unsaturated carbon-carbon bond in which the number of carbon atoms is 1 to 12, an alkylcarbonyl group in which the number of carbon atoms is 1 to 12, a hydroxyl group, an alkoxy group in which the number of carbon atoms is 1 to 12, or a mercapto group.

The above-described substituted amino group represents an amino group in which at least one of the hydrogen atoms bonded to the nitrogen atom in the amino group is substituted with any monovalent substituent. Preferably, it is a substituted amino group which is substituted with an alkyl group in which the number of carbon atoms is 1 to 12, an aryl group in which the number of carbon atoms is 6 to 10, an alkyl group having an unsaturated carbon-carbon bond in which the number of carbon atoms is 1 to 12, or an alkylcarbonyl group in which the number of carbon atoms is 1 to 12.

In relation to the compound of component (C), an amine compound having a 1,3,5-triazine fused ring structure refers to a compound which has a 1,3,5-triazine fused ring structure and an amino group. Examples of amine compounds having a 1,3,5-triazine fused ring structure include, for example, the compounds of the above-described formula (C2) wherein at least one of R₂₄, R₂₅ and R₂₆ are an amino group or substituted amino group. Alternatively, they may be compounds wherein at least one of R₂₄, R₂₅ and R₂₆ comprise an amino group or substituted amino group. For example, they may be compounds wherein at least one of R₂₄, R₂₅ and R₂₆ are an amino alkyl group. Preferably, R₂₄, R₂₅ and R₂₆ are each independently an amino group or substituted amino group. More preferably, each of R₂₄, R₂₅ and R₂₆ is an amino group.

The compound having the structure of the above-described formula (C2) may be a salt. For example, salts of compounds having a structure in which a plurality of melamine molecules are fused can be used. Types of the salts include, for example, acid addition salts in which an acidic compound is added to basic nitrogen in the compound (for example, melem cyanurate, melem phosphate, or melem pyrophosphate). As the acid addition salt, a cyanurate salt is preferable.

Among the salts of the compounds having the structure of the above-described formula (C2), preferable salts are a cyanurate salt, phosphate salt or pyrophosphate salt of the compounds of the above-described formula (C2). More preferable salts are a cyanurate salt of the compound having the structure in which a plurality of melamine molecules are fused.

In one preferable embodiment, one, two or three of R₂₄, R₂₅ and R₂₆ of the amine compound having a 1,3,5-triazine fused ring structure of the above-described formula (C2) are amino groups, and at least one of the amino groups forms a salt with an acidic compound (for example, a compound having a cyanuric acid group or a phosphoric acid group). Also from this viewpoint that an amino group forms a salt with an acidic compound, a cyanurate salt, a phosphate salt and a pyrophosphate salt of a compound having a structure in which a plurality of melamine molecules are fused are preferable.

The compound having plurality of 1,3,5 triazine fused ring structures may be a compound of the above-described formula (C2) wherein at least one of R₂₄ to R₂₆ has a 1,3,5-triazine fused ring structure. That is, it may be a compound having a structure in which a plurality of 1,3,5-triazine fused ring structures are connected (for example, melone).

In addition, the compound having plurality of 1,3,5-triazine fused ring structures may be a compound having a structure in which a plurality of 1,3,5-triazine fused ring structures are bound to at least one skeleton structure. That is, it may be a compound having a structure in which a plurality of 1,3,5-triazine fused ring structures are bound to the main chain (for example, melem pyrophosphate or melem polyphosphate).

In addition, the compound having a 1,3,5-triazine fused ring structure may be a compound of the above-described formula (C2) wherein at least one of R₂₄ to R₂₆ has a 1,3,5-triazine structure. That is, it may be a compound having a structure in which a plurality of 1,3,5-triazine structures and a plurality of 1,3,5-triazine fused ring structures are connected.

In addition, a compound which has a plurality of 1,3,5-triazine structures and a plurality of 1,3,5-triazine fused ring structures may be a compound having a structure in which a plurality of 1,3,5-triazine ring structures and a plurality of 1,3,5-triazine fused ring structures are bound to at least one skeleton structure. That is, the compound may have a structure in which a plurality of 1,3,5-triazine structures and a plurality of 1,3,5-triazine fused ring structures are bound to the main chain.

Specific examples of the triazine-based compound having a 1,3,5-triazine structure and the amine compound having a 1,3,5-triazine structure include, for example, melamine, ureidomelamine, N²,N⁴-diethylmelamine, N,N'-diallylmelamine, hexamethylmelamine, melam, ammeline, ammelide, melamine phosphate, melam phosphate, melamine phosphonate, melamine phosphinate, melamine sulfate, melamine nitrate, melamine borate, melamine pyrophosphate, melam pyrophosphate, melamine polyphosphate, melam polyphosphate, melamine metaphosphate, melam metaphosphate, melamine cyanurate, melam cyanurate, melem cyanurate, melone cyanurate, and a homopolymer of 2-piperazinylene-4-morpholino-1,3,5-triazine, acetoguanamine, benzoguanamine, acryloguanamine, methacryloguanamine, 2,4-diamino-6-nonyl-1,3,5-triazine, 2,4-diamino-6-hydroxy-1,3,5-triazine, 2-amino-4,6-dihydroxy-1,3,5-triazine, 2,4-diamino-6-methoxy-1,3,5-triazine, 2,4-diamino-6-ethoxy-1,3,5-triazine, 2,4-diamino-6-propoxy-1,3,5-triazine, 2,4-diamino-6-isopropoxy-1,3,5-triazine, 2,4-diamino-6-mercapto-1,3,5-triazine and 2-amino-4,6-dimercapto-1,3,5-triazine, and their cyanurate salt, phosphate salt, pyrophosphate salt or polyphosphate salt.

Also, the triazine-based compound having a 1,3,5-triazine structure may be a compound represented by the following formula (C3), or a cyanurate salt, phosphate salt, pyrophosphate salt or polyphosphate salt of a compound of the following formula (C3).

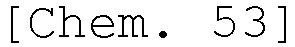

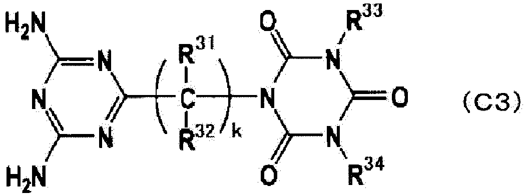

In the formula, k represents an integer of 1 or more, and preferably k is an integer of 1 to 4. R³¹ and R³² are the same or different and are a hydrogen atom or an alkyl group. R³³ and R³⁴ are the same or different and are a hydrogen atom, an alkyl group, a cyanoalkyl group, a carboxyalkyl group, an alkoxycarbonylalkyl group, an aryloxycarbonylalkyl group, a haloformylalkyl group, or a guanamylalkyl group. The number of the carbon atoms of each of the alkyl group and the alkoxy group is preferably 1 to 6. The number of the carbon atoms of the aryl is preferably 6 to 12.

Specific examples of the triazine-based compound having a 1,3,5-triazine fused ring structure and the amine compound having a 1,3,5-triazine fused ring structure include, for example, melem, melone, melem cyanurate, melem pyrophosphate, melem polyphosphate, melone cyanurate, melone pyrophosphate, and melone polyphosphate. It should be noted that in the present specification, "melone" refers to a compound having a structure in which melem is fused. Melone cyanurate refers to a compound having a structure in which melone is bonded to cyanuric acid.

Specific examples of the triazine-based compounds of component (C) preferably include a melamine cyanurate, melam cyanurate, melem cyanurate, melone cyanurate, melamine phosphate, melam phosphate, melem phosphate, melone phosphate, melamine metaphosphate, melam metaphosphate, melem metaphosphate, melone metaphosphate, melamine pyrophosphate, melam pyrophosphate, melem pyrophosphate, melone pyrophosphate, melamine polyphosphate, melam polyphosphate, melem polyphosphate, and melone polyphosphate. A melamine cyanurate, melam cyanurate, melem cyanurate, and melone cyanurate are more preferable, and a melamine cyanurate is further preferable.

### <Flame retardant composition>

The flame retardant composition of the present invention comprises the above-described component (A) and the above-described component (B).

The phosphoramidate compound represented by the general formula (I) is used in combination with a hindered amine compound to exert an excellent flame retardant effect. When it is added to a resin, bleed-out does not occur. In a preferable embodiment, a value of a blending ratio (mass ratio) (A)/(B) can be higher than 1, and thereby a significantly high flame retardant performance can be achieved.

A lower limit value of the mass ratio of a blending ratio (A)/(B) of the phosphoramidate compound represented by the general formula (I) and the hindered-amine compound is preferably 1 or more, more preferably 3 or more, further preferably 5 or more, still more preferably 7 or more, and particularly preferably 10 or more. In addition, an upper limit value of the mass ratio of (A)/(B) is preferably 1,000 or lower, more preferably 100 or lower, and further preferably 50 or lower. When the value of the ratio (A)/(B) is too low or too high, the flame retardant performance or a property of the thermoplastic resin is likely to be lowered.

The flame retardant composition of the present invention optionally comprises component (C) in addition to the above-described component (A) and the above-described component (B). By combining the above-described component (C) with the above-described component (A) and the above-described component (B), it is possible to suppress bleed-out when it is added to a resin, and a further higher flame retardant performance can be provided than a case when only the above-described component (A) and the above-described component (B) are used.

The phosphoramidate compound represented by the general formula (I) exerts a further excellent flame retardant effect by a use in combination with a hindered amine compound and component (C), and when it is added to a resin, bleed-out does not occur. In a preferable embodiment, values of blending ratios (mass ratios) (A)/(B) and (C)/(B) can be higher than 1, and thereby a significantly high flame retardant performance can be achieved.

When component (C) is used in the composition of the present invention, a lower limit value of the mass ratio of a blending ratio (A)/(B) of component (A) and component (B) and a lower limit value of the mass ratio of a blending ratio (C)/ (B) of component (C) and component (B) are each independently preferably 1 or more, more preferably 1.3 or more, further preferably 1.5 or more, still more preferably 1.7 or more, and particularly preferably 2 or more. In addition, an upper limit value of the mass ratio of (A)/(B) and an upper limit value of the mass ratio of (C)/(B) are each independently preferably 50 or lower, more preferably 30 or lower, further preferably 25 or lower, still more preferably 20 or lower, and particularly preferably 15 or lower. When the value of the ratio of (A)/(B) or (C)/(B) is too low or too high, the flame retardant performance would be lower in comparison with the case where the value of (A)/(B) or (C)/(B) is within a preferable range.

The flame retardant composition of the present invention can be suitably used as a flame retardant composition for a thermoplastic resin in a preferable embodiment, and as a flame retardant composition for a polyolefin resin in a more preferable embodiment.

### <Component (D)>

The flame retardant composition of the present invention can be effectively used for a thermoplastic resin. In addition, for the thermoplastic resin composition of the present invention, as component (D), a thermoplastic resin is used.

The types of the thermoplastic resin are not particularly limited. The resin may be a polymer wherein vinyl groups are radically polymerized, or a polymer which is polymerized by condensation polymerization. A polymer formed by radical polymerization is preferable. More preferably, the resin is a polyolefin resin.

In addition, the polymer may be a homopolymer or a copolymer.

The thermoplastic resin of component (D) is preferably a polyolefin resin, and more preferably polyethylene, polypropylene and a copolymer containing propylene or ethylene.

It should be noted that, in the present specification, in relation to a composition of a copolymer, the term "ethylene" means a moiety derived from ethylene in a polymer which is obtained when a monomer mixture comprising ethylene or propylene as a raw material is polymerized. In addition, in relation to a composition of a copolymer, the term "propylene" means a moiety derived from propylene in a polymer which is obtained when a monomer mixture comprising propylene as a raw material is polymerized.

The types of polyethylene are not particularly limited. The polyethylene can be a high density polyethylene (HDPE), can be a linear low density polyethylene (LLDPE), can be a branched low density polyethylene (LDPE), and can be ultra high molecular weight polyethylene (UHMWPE).

The types of polypropylene are not particularly limited. The polypropylene can be isotactic polypropylene, can be syndiotactic polypropylene, and can be atactic polypropylene.

The copolymer containing propylene or ethylene can be a copolymer of propylene and another monomer, can be a copolymer of ethylene and another monomer, and can be a copolymer of propylene, ethylene and another monomer.

Regarding the copolymer, when a property of polyethylene is desired, a ratio of ethylene in the copolymer is preferably 10 mol % or more, more preferably 30 mol % or more, further preferably 50 mol % or more, and particularly preferably 70 mol % or more.

Regarding the copolymer, when a property of polypropylene is desired, a ratio of propylene in the copolymer is preferably 10 mol % or more, more preferably 30 mol % or more, further preferably 50 mol % or more, and particularly preferably 70 mol % or more.

Regarding the copolymer, when properties of both of polyethylene and polypropylene are desired, a ratio of a total amount of ethylene and propylene in the copolymer is preferably 10 mol % or more, more preferably 30 mol % or more, further preferably 50 mol % or more, and particularly preferably 70 mol % or more.

Regarding the copolymer, if necessary, it is possible to copolymerize a halogen-containing monomer (for example, vinyl chloride monomer). However, a halogen-containing monomer is not preferable from the viewpoint of environmental problems. Therefore, in a preferable embodiment, a copolymer does not comprise a halogen-containing monomer.

As the thermoplastic resin of component (D), a halogen-containing thermoplastic resin (for example, a polyvinyl chloride resin) can be also used. However, a halogen-containing thermoplastic resin is not preferable from the viewpoint of environmental problems. Therefore, in a preferable embodiment, the thermoplastic resin of component (D) does not comprise a halogen-containing thermoplastic resin.

In one embodiment, it is also possible to use, as the thermoplastic resin of component (D), a halogen-containing thermoplastic resin by mixing it with a thermoplastic resin containing no halogen. However, from the viewpoint of environmental problems, it is preferable that the amount of a halogen-containing thermoplastic resin is small. A content of a halogen-containing thermoplastic resin is preferably 30 % by mass or lower, more preferably 10 % by mass or lower, further preferably 5 % by mass or lower, and particularly preferably 1 % by mass or lower with respect to a total amount of the halogen-containing thermoplastic resin and a thermoplastic resin containing no halogen.

### <Flame retardant thermoplastic resin composition>

The flame retardant thermoplastic resin composition of the present invention can be obtained by mixing each of the components of the flame retardant composition and a thermoplastic resin. Regarding preparation of the flame retardant thermoplastic resin composition, it is possible to use a method wherein a step of mixing each of the components of the flame retardant composition is performed to prepare a flame retardant composition, and thereafter, the prepared flame retardant composition and a thermoplastic resin are mixed. It is also possible to use a method wherein a step of preparing a flame retardant composition is not performed and each of the components of the flame retardant composition and a thermoplastic resin are mixed.

An amount of component (A) which is blended in the thermoplastic resin composition is not particularly limited. However, the amount is preferably 0.1 parts by mass or more, more preferably 0.5 parts by mass or more, and particularly preferably 1 parts by mass or more with respect to 100 parts by mass of a total amount of component (A) to component (D). In addition, the amount is preferably 45 parts by mass or lower, more preferably 40 parts by mass or lower, further preferably 35 parts by mass or lower, still further preferably 30 parts by mass or lower, and particularly preferably 25 parts by mass or lower with respect to 100 parts by mass of a total amount of component (A) to component (D). When the amount is too small, it is unlikely to achieve an effect by adding it. When the amount is too large, a physical property of the thermoplastic resin composition may be deteriorated.

An amount of component (B) which is blended in the thermoplastic resin composition is not particularly limited. However, the amount is preferably 0.01 parts by mass or more, more preferably 0.1 parts by mass or more, further preferably 0.3 parts by mass or more, and particularly preferably 0.5 parts by mass or more with respect to 100 parts by mass of a total amount of component (A) to component (D). In addition, the amount is preferably 15 parts by mass or lower, more preferably 10 parts by mass or lower, further preferably 7 parts by mass or lower, and particularly preferably 5 parts by mass or lower with respect to 100 parts by mass of a total amount of component (A) to component (D). When the amount is too small, it is unlikely to achieve an effect by adding it. When the amount is too large, a physical property of the thermoplastic resin composition may be deteriorated.

An amount of component (C) which is blended in the thermoplastic resin composition is not particularly limited. However, the amount is preferably 1 part by mass or more, more preferably 2 parts by mass or more, further preferably 3 parts by mass or more, and particularly preferably 5 parts by mass or more with respect to 100 parts by mass of a total amount of component (A) to component (D). In addition, the amount is preferably 30 parts by mass or lower, more preferably 25 parts by mass or lower, further preferably 20 parts by mass or lower, and particularly preferably 17 parts by mass or lower with respect to 100 parts by mass of a total amount of component (A) to component (D). When the amount is too small, it is unlikely to achieve an effect by adding it. When the amount is too large, a physical property of the thermoplastic resin composition may be deteriorated.

A total amount of the component (A) and the component (B) to be blended in the thermoplastic resin composition is not particularly limited. However, the total amount of the component (A) and the component (B) is preferably 1 part by mass or more, more preferably 2 parts by mass or more, further preferably 3 parts by mass or more, still further preferably 5 parts by mass or more, and particularly preferably 7 parts by mass or more with respect to 100 parts by mass of a total amount of component (A) to component (D). When a total amount of the component (A) and the component (B) to be blended is too small, there may be cases where a high flame retardance is not achieved. In addition, a total amount of the component (A) and the component (B) to be blended is preferably 50 parts by mass or lower, more preferably 45 parts by mass or lower, further preferably 40 parts by mass or lower, still further preferably 35 parts by mass or lower, particularly preferably 30 parts by mass or lower, and most preferably 25 parts by mass or lower with respect to 100 parts by mass of a total amount of component (A) to component (D). Furthermore, in one embodiment, a total amount of the component (A) and the component (B) to be blended can be 20 parts by mass or lower, can be 15 parts by mass or lower, and can be 10 parts by mass or lower. When a total amount of the component (A) and the component (B) to be blended is too large, a physical property of the resin may be deteriorated.

A total amount of the component (A), the component (B) and the component (C) to be blended in the thermoplastic resin composition is not particularly limited. However, the total amount of the component (A), the component (B) and the component (C) to be blended is preferably 1 part by mass or more, more preferably 2 parts by mass or more, further preferably 3 parts by mass or more, still further preferably 5 parts by mass or more, and particularly preferably 7 parts by mass or more with respect to 100 parts by mass of a total amount of component (A) to component (D). When a total amount of the component (A), the component (B) and the component (C) to be blended is too small, there may be cases where a high flame retardance is not achieved. When a total amount of the component (A), the component (B) and the component (C) to be blended is too large, a physical property of the resin may be deteriorated. In addition, a total amount of the component (A), the component (B) and the component (C) to be blended is preferably 50 parts by mass or lower, more preferably 45 parts by mass or lower, further preferably 40 parts by mass or lower, still further preferably 35 parts by mass or lower, particularly preferably 30 parts by mass or lower, and most preferably 25 parts by mass or lower. Furthermore, in one embodiment, a total amount of the component (A), the component (B) and the component (C) to be blended can be 20 parts by mass or lower, can be 15 parts by mass or lower, and can be 10 parts by mass or lower. When a mixture of the component (A), the component (B) and the component (C) is used, there is an advantage in that even if the total amount to be blended is small (for example, even if the total amount is 10 parts by mass or lower with respect to 100 parts by mass of the total amount of component (A) to component (D)), high flame retardance can be achieved.

### <Other flame retardants>

If necessary, a flame retardant other than the flame retardant composition of the present invention can be used in the thermoplastic resin composition of the present invention. That is, a compound other than the above-described component (A), component (B) and component (C) which can provide a flame retardance with a thermoplastic resin (hereinafter, referred to as "other flame retardant") can also be used in the thermoplastic resin composition.

For example, if necessary, an organic-type flame retardant other than the phosphoramidate compounds or an inorganic-type flame retardant can be used. Examples of the organic-type flame retardant other than the phosphoramidate compounds include a halogen-based flame retardant, and a phosphate-based flame retardant. Examples of the inorganic flame retardant include an antimony compound, and metal hydroxide. Specific examples of the metal hydroxide include, for example, aluminum hydroxide (alumina hydrate), and magnesium hydroxide. In addition, a metal oxide or metal salt can also be used as an other flame retardant. For example, zinc oxide, aluminum hypophosphite or tris(diethylphosphinic acid) aluminum can be preferably used.

However, in order to take advantage of the flame retardant of the present invention, it is preferable that an amount of the other flame retardant to be used is small. For example, the amount of the other flame retardant to be used is preferably 20 parts by mass or less, more preferably 10 parts by mass or less, further preferably 5 parts by mass or less, still more preferably 1 part by mass or less with respect to 100 parts by mass of a thermoplastic resin. Further, for example, the amount of the other flame retardant to be used is preferably 100 parts by mass or less, more preferably 50 parts by mass or less, further preferably 20 parts by mass or less, and still more preferably 10 parts by mass or less with respect to 100 parts by mass of the flame retardant composition of the present invention.

In one preferable embodiment, the thermoplastic resin of the present invention does not comprise a halogen-based flame retardant. That is, it does not comprise a compound which has a halogen atom and can provide a flame retardance to a thermoplastic resin.

In a particularly preferable embodiment, the other flame retardant is not mixed, and a flame retardant composition which consists of only component (A) and component (B) or a flame retardant composition which consists of only component (A), component (B) and component (C) is used.

The flame retardant of the present invention can achieve a high flame retardance and various performances which are required for general thermoplastic resin products even if it is not mixed with the other flame retardant. Therefore, if the intended thermoplastic resin product is not a product for a special use, then it is not necessary to mix the thermoplastic resin composition of the present invention with the other flame retardant.

### <Other additives>

Further, various additives other than components (A) to (C) may be blended in the flame retardant thermoplastic resin composition of the present invention depending on the properties which are desired for the resin composition and within a range in which the effect of the present invention is not deteriorated. For example, a flame retardant auxiliary agent, ultraviolet absorber, antioxidant other than hindered amine compounds, light stabilizer other than hindered amine compounds, coloring agent (for example, dye or pigment), surface modifier, antibacterial agent, insect repellent, antistatic agent, filler (for example, inorganic filler), and reinforcing agent (for example, glass fiber reinforcing material) can be added.

It should be noted that, a hindered amine compound generally has a function as an antioxidant or light stabilizer. However, in the present specification, a hindered amine compound is encompassed in the above-described component (B) and therefore is not encompassed in other additives.

The types and amount to be added of these additives are not particularly limited, and an additive which is generally used can be used in a range of the amount which is generally used. Specifically, for example, for each of these additives, the amount can be 0.01 parts by mass or more, 0.1 parts by mass or more, or 1 part by mass or more with respect to 100 parts by mass of a thermoplastic resin. Further, the amount can be 20 parts by mass or less, and can be 10 parts by mass or less, or 5 parts by mass or less with respect to 100 parts by mass of a thermoplastic resin.

However, the aforementioned additives, such as coloring agent, cross-linking agent, ultraviolet absorber, hydrolysis inhibitor, filler, and reinforcing material, are not always required for the thermoplastic resin composition of the present invention. It is enough as long as these additives are used for a thermoplastic resin composition in a minimum required amount based on required performances for an intended thermoplastic resin product.

### <Method for preparing a composition>

The operations of mixing and stirring at the time of preparing the flame retardant composition or preparing the flame retardant thermoplastic resin composition can be performed by using a conventional stirring device, for example, a various mill, Henschel mixer (FM mixer) or the like. If the various components can be uniformly mixed, the order of the addition does not matter. It is possible that all of the components are put into a stirring device at once and they are mixed and stirred. Alternatively, it is possible to add the phosphoramidate compound from a side feeder. In addition, it is possible that a masterbatch of a thermoplastic resin and the phosphoramidate compound is prepared in advance, and a required amount of the masterbatch is blended to a thermoplastic resin, making into a necessary amount of a flame retardant in accordance with the flame retardant standard of the final product, to obtain a flame retardant resin composition having a desired flame retardance.

In addition, it is also possible that when heat-melting molding of a thermoplastic resin (for example, injection molding or extrusion molding) is performed, a flame retardant is mixed with a thermoplastic resin to obtain a flame retardant resin composition.

### <Molded product>

The flame retardant thermoplastic resin composition of the present invention can be molded by any method which is known as a method of molding a thermoplastic resin. If a molding machine, a mold and the like which are suitable for the desired molded product are used, the desired molded product can be easily obtained. For example, various molded products such as automobile upholstery, packaging material, a material for electrical devices, a sheet or film for a building material, and a material covering electric wire can be molded.

The molded product which is obtained has an advantage that it has an excellent flame retardance and the performance of the thermoplastic resin is not significantly lowered.

### [Examples]

The present invention is described in further details based on the following Examples. However, the present invention is not limited by the following Examples.

### (Examples 1 to 7)

The resin and the additives were mixed in the ratios shown in Table 1, and flame retardant resin compositions were obtained.

The resin and additives which were used are as described below.
(1) Polypropylene resin: Prime Polypro (registered trademark) J-750HP made by Prime Polymer.
(2) Phosphoramidate 1: A cyclic phosphoramidate which was produced according to the procedure described in paragraph 0173 of U.S. Patent Application Laid-open Publication No. 2016/0244582. Pulverized product. Average particle size about 4 um. A bicyclic phosphoramidate compound of formula (4). A phosphoramidate according to the present invention. 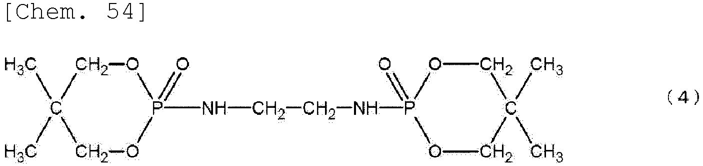
(3) Phosphoramidate 2: SP-703 made by Shikoku Chemicals, phosphoramidate for comparative examples. 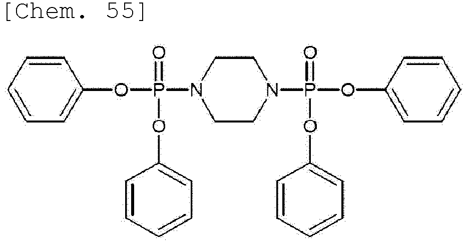
(4) Melamine cyanurate: MC-4000 made by Nissan Chemical. Melamine cyanurate powder. Average particle diameter 12 um.
(5) Hindered amine 1: Flamestab NOR-116 made by BASF Japan, Triazine derivative. 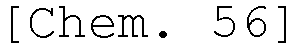 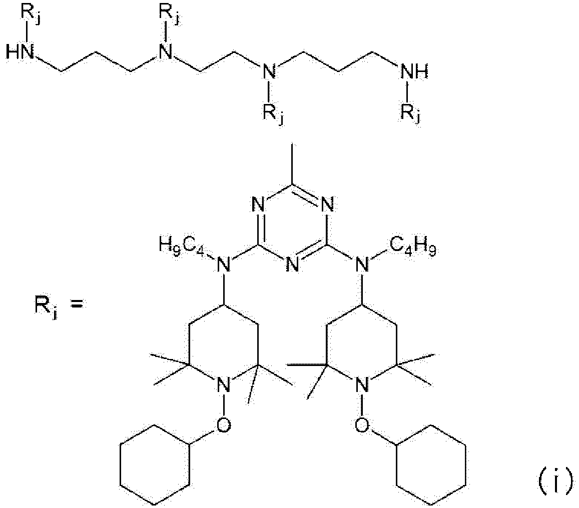
(5) Hindered amine 2: Tinuvin NOR-371 made by BASF Japan. A hindered amine compound of formula (ii): 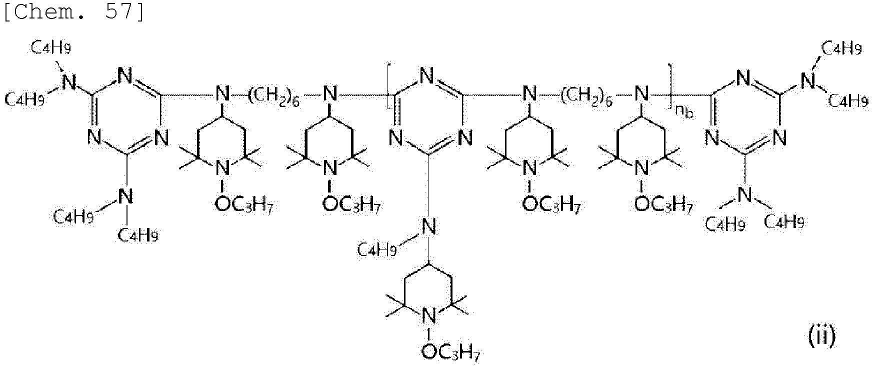 wherein n_{b} is 1 to 10.
(6) Hindered amine 3: Tinuvin XT 850 made by BASF Japan. A hindered amine compound.
(7) Stabilizer 1: Irganox B 561 made by BASF, a blend of 20% Irganox 1010, a hindered phenol-type thermal stabilizer and 80% Irgaphos 168, a phosphite process stabilizer.

### (Method of producing test pieces)

A twin-screw kneading extruder (TEM-37BS made by Toshiba machine) was used to mix the resin and additives in the ratios shown in Table 1, and a kneading step was performed under setting of 180 °C. The strand which was obtained from the extrusion axis was cooled in a water bath. Thereafter the strand was cut by a pelletizer to obtain pellets. The pellets were dried for 4 hours in a constant temperature dryer maintained at 80°C. The dried pellets were then molded at a molding temperature of 180°C using an injection molding machine (FN2000: made by Nissei Plastic Industrial), and test pieces of a predetermined shape were produced.

The obtained test pieces were used to perform the tests as described below.

### [Flame retardance test]

The flame retardance test was performed in accordance with the vertical test combustion method of "Test for flammability of plastic materials for parts in devices and appliances" of UL subject 94 (Underwrighters Laboratories Incorporated). Regarding the wall thickness of the test piece, 1.6 mm (1/16 inches) and 3.2 mm (1/8 inches) were used.

### (Oxygen index)

The measurement of oxygen indices (L.O.I) was performed in accordance with Japan Industrial Standard JIS K7201 (Test method of flammability based on oxygen index).

### (Method for testing bleed-out)

In order to check for bleed-out, when the above-described injection molding was performed, the presence/absence of adhesion of an additive to the mold and contamination were visually observed at the time of processing the resin. In order to further observe bleed-out from the molded products, test pieces having a wall thickness of 1.6 mm (1/16 inches) of UL Subject 94 obtained by the injection molding were prepared. The test pieces were left in a constant-temperature dryer maintained at 80°C for 2 weeks, and the ratios of decrease were observed from the weight changes of the test pieces before and after the test. It should be noted that, regarding the weight change ratio, a difference between the weight of the test piece after the surface of the test piece was wiped with acetone after the test and the weight before the test was obtained and expressed as a percentage.

The results are shown in Table 1 and Table 2. It should be noted that the blending amounts in Table 1 and Table 2 are all based on parts by mass.

**[Table 1]**

| | Example 1 | Example 2 | Example 3 | Example 4 | Example 5 | Example 6 | Example 7 |
|---|---|---|---|---|---|---|---|
| Polypropylene resin | 79 | 83 | 79 | 83 | 90 | 90 | 87 |
| Phosphoramidate 1 | 20 | 16 | 5 | 4 | 3 | 3 | 3 |
| Phosphoramidate 2 | - | - | - | - | - | - | - |
| Hindered amine 1 | 1 | 1 | 1 | 1 | 1 | - | - |
| Hindered amine 2 | - | - | - | - | - | 1 | - |
| Hindered amine 3 | - | - | - | - | - | - | 1 |
| Melamine cyanurate | - | - | 15 | 12 | 6 | 6 | 9 |
| Stabilizer 1 | - | - | - | - | - | - | - |
| UL-94 (1/16") | V-2 | V-2 | V-2 | V-2 | V-2 | V-2 | V-2 |
| UL-94 (1/8") | V-2 | V-2 | V-2 | V-2 | V-2 | V-2 | V-2 |
| L.O.I. | 24.1 | 23.2 | 24.1 | 24.1 | 24.1 | 23.2 | 23.7 |
| Presence/absence of mold adhesion or contamination | absent | absent | absent | absent | absent | absent | absent |
| Bleed-out (weight change ratio %) | <0.01 | <0.01 | <0.01 | <0.01 | <0.01 | <0.01 | <0.01 |

**[Table 2]**

| | Compar ative Example 1 | Compar ative Example 2 | Compar ative Example 3 | Compar ative Example 4 | Compar ative Example 5 |
|---|---|---|---|---|---|
| Polypropylene resin | 79 | 79 | 90 | 90 | 79 |
| Phosphoramidate 1 | 20 | 5 | - | - | - |
| Phosphoramidate 2 | - | - | 9 | 3 | - |
| Hindered amine 1 | - | - | 1 | - | 1 |
| Hindered amine 2 | - | - | - | 1 | - |
| Hindered amine 3 | - | - | - | - | - |
| Melamine cyanurate | - | 15 | - | 6 | 20 |
| Stabilizer 1 | 1 | 1 | - | - | - |
| UL-94 (1/16") | Not-V | Not-V | Not-V | V-2 | Not-V |
| UL-94 (1/8") | Not-V | Not-V | Not-V | V-2 | Not-V |
| L.O.I. | 24.1 | 19.7 | 21.9 | 23.7 | 19.7 |
| Presence/absence of mold adhesion or contamination | absent | absent | present | present | absent |
| Bleed-out (weight change ratio %) | <0.01 | <0.01 | 0.16 | 0.12 | <0.01 |

| | | | | | |
|---|---|---|---|---|---|
| Not-V: The result did not fall within any of V-0, V-1, or V-2 of the UL-94 vertical burning test, and the flame reached the fixing clamp and the test piece was burned completely while dripping. | | | | | |

As shown in Table 1 and Table 2 above, from the results of Examples 1 to 7, when phosphoramidate 1 having the structure specified by the present invention was used in combination with a hindered amine compound, it was possible to increase the oxygen index values while it was possible to achieve flame retardance of V-2 in the UL94 vertical combustion test and it was possible to suppress bleed-out.

In particular, from the results of Examples 5 and 6, the flame retardant compositions of the present invention comprising the three components of the phosphoramidate 1, the hindered amine, and the melamine cyanurate was able to achieve V-2 flame retardance even when the amount of the addition was decreased to 10% by mass and it was possible to suppress bleed-out.

From Example 1 and Comparative Example 1, it was confirmed that even though the oxygen index values were at the same level, the composition in which component (B) was replaced with a stabilizer other than a hindered amine compound does not satisfy V-2 standard in the UL94 vertical combustion test.

From the results of Comparative Examples 1 and 2, it was confirmed that if phosphoramidate 1 was used without a hindered amine compound, it is impossible to achieve V-2 flame retardance.

From the results of Comparative Examples 3 to 4, when phosphoramidate 2 for comparison is used in combination with a hindered amine compound, then it was impossible to achieve both the flame retardance of V-2 and the bleed-out prevention. If the amount of the added phosphoramidate 2 for comparison is reduced, then it is impossible to satisfy the flame retardance of V-2, and conversely, if the added amount is increased, then bleed-out occurs.

From the results of Comparative Example 5, it was confirmed that the combination of a melamine cyanurate and a hindered amine alone cannot achieve the flame retardance resulting in V-2.

From the comparison of Examples 5 and 6 with Comparative Examples 3 and 4, it was confirmed that the thermoplastic resin containing phosphoramidate 2 for comparison has a disadvantage in that bleed-out already occurs during the molding process, while when phosphoramidate 1 of the present invention having a specific structure is used, no bleed-out occurs and there is no mold adhesion and contamination is generated by the additives.

### [Industrial Applicability]

According to the present invention, a flame retardant composition which can provide a flame retardance to a thermoplastic resin and does not substantially deteriorate a performance of the thermoplastic resin is provided. In addition, a flame retardant thermoplastic resin composition which uses the flame retardant composition is provided. The flame retardant composition and the flame retardant thermoplastic resin composition according to the present invention can be used in molded products such as an automobile upholstery, a packaging material, a material for electrical devices, a sheet or film for building materials, and a material covering electric wire.

## Claims

1. A flame retardant composition for a thermoplastic resin, wherein the composition comprises component (A) and component (B), wherein
the component (A) is a phosphoramidate compound represented by the following general formula (I): 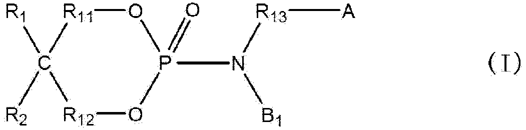
wherein R₁ and R₂ are each independently a hydrogen atom or an alkyl group in which the number of carbon atoms is 1 to 3, R₁₁ and R₁₂ are each independently an alkylene group in which the number of carbon atoms is 1 to 3, R₁₃ is an alkylene group in which the number of carbon atoms is 1 to 6, B₁ is a hydrogen atom or an alkyl group in which the number of carbon atoms is 1 to 6, and A is a hydrogen atom or an organic group represented by general formula (II): 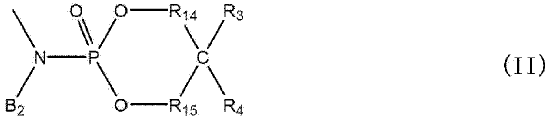
wherein R₃ and R₄ are each independently a hydrogen atom or an alkyl group in which the number of carbon atoms is 1 to 3, R₁₄ and R₁₅ are each independently an alkylene group in which the number of carbon atoms is 1 to 3, and B₂ is a hydrogen atom or an alkyl group in which the number of carbon atoms is 1 to 6, and
wherein when A is a hydrogen atom and B₁ is an alkyl group in which the number of carbon atoms is 1 to 6, then B₁ and R₁₃-A may be bound to form a nitrogen-containing heterocycle with the nitrogen atom to which they are bound, and
when A is an organic group represented by the general formula (II), B₂ is an alkyl group in which the number of carbon atoms is 1 to 6, and B₁ is an alkyl group in which the number of carbon atoms is 1 to 6, then B₁ and B₂ may be bound to form a nitrogen-containing heterocycle with the nitrogen atom to which they are bound and R₁₃, and
wherein the component (B) is a hindered amine compound.

2. The flame retardant composition according to claim 1, wherein in the general formula (I), A is an organic group represented by the general formula (II).

3. The flame retardant composition according to any one of claims 1 to 2, wherein in the general formula (I), R₁ and R₂ are methyl groups, and R₁₁ and R₁₂ are methylene groups.

4. The flame retardant composition according to any one of claims 1 to 3, wherein in the general formula (I), A is an organic group represented by the general formula (II), R₃ and R₄ are methyl groups, and R₁₄ and R₁₅ are methylene groups.

5. The flame retardant composition according to claim 4, wherein in the general formula (I), R₁₃ is an alkylene group in which the number of carbon atoms is 1 to 4, preferably 1 to 2.

6. The flame retardant composition according to claim 4 or 5, wherein in the general formula (I), B₁ and B₂ are hydrogen atoms.

7. The flame retardant composition according to any one of claims 1 to 6, wherein the component (B) is a compound which has a piperidine structure.

8. The flame retardant composition according to any one of claims 1 to 6, wherein the component (B) is an NOR-type hindered amine compound, preferably wherein a chain alkyl is bound to an oxygen atom in the NOR-type hindered amine structure.

9. The flame retardant composition according to any one of claims 1 to 6, wherein the component (B) comprises an NOR-type hindered amine structure which has the piperidine structure represented by the following general formula (B3): 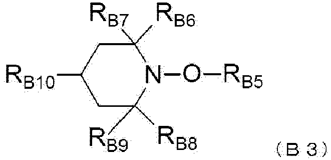
wherein R_{B5} is a straight chain or branched chain alkyl group in which the number of carbon atoms is 1 to 30, a straight chain or branched chain alkenyl group in which the number of carbon atoms is 2 to 30, a cycloalkyl group in which the number of carbon atoms is 5 to 18, a cycloalkenyl group in which the number of carbon atoms is 5 to 18, or a straight chain or branched chain alkyl group substituted with a phenyl group in which the number of carbon atoms in the alkyl group is 1 to 4, wherein, R_{B5} may be substituted with at least one hydroxyl group;
R_{B6}, R_{B7}, R_{B8} and R_{B9} are each independently a straight chain or branched chain alkyl group in which the number of carbon atoms is 1 to 4; and
R_{B10} is any organic group.

10. The flame retardant composition according to claim 9, wherein the component (B) is selected from the group consisting of the following general formulas (B4-a), (B4-b) and (B4-c): 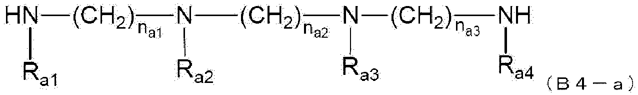
wherein nₐ₁, nₐ₂ and nₐ₃ are each independently an integer of 1 to 4, Rₐ₁ to Rₐ₄ are each independently a hydrogen atom or an organic group of the following formula (B4-a-i), with the proviso that at least one of Rₐ₁ to Rₐ₄ is an organic group of the following formula (B4-a-i): 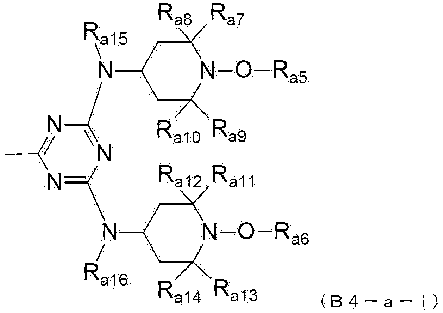
wherein, Rₐ₅ and Rₐ₆ each independently have the same meaning as the meaning of R_{B5},
Rₐ₇, Rₐ₈, Rₐ₉ and Rₐ₁₀ each independently have the same meaning as the meaning of R_{B6}, R_{B7}, R_{B8} and R_{B9}.
Rₐ₁₁, Rₐ₁₂, Rₐ₁₃ and Rₐ₁₄ each independently have the same meaning as the meaning of R_{B6}, R_{B7}, R_{B8} and R_{B9}, and
Rₐ₁₅ and Rₐ₁₆ are each independently a hydrogen atom, a straight chain or branched chain alkyl group in which the number of carbon atoms is 1 to 12 or a straight chain or branched chain alkenyl group in which the number of carbon atoms is 2 to 12; 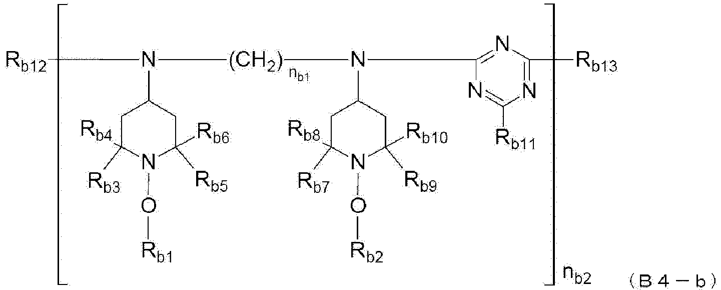
wherein n_{b1} is an integer of 2 to 8,
n_{b2} is an integer of 1 to 10,
R_{b1} and R_{b2} each independently have the same meaning as the meaning of R_{B5},
R_{b3}, R_{b4}, R_{b5} and R_{b6} each independently have the same meaning as the meaning of R_{B6}, R_{B7}, R_{B8} and R_{B9},
R_{b7}, R_{b8}, R_{b9} and R_{b10} each independently have the same meaning as the meaning of R_{B6}, R_{B7}, R_{B8} and R_{B9},
R_{b11} is a nitrogen-containing substituent T₁ of the following formula (B4-b-i), and
R_{b12} and R_{b13} are each independently any organic group, 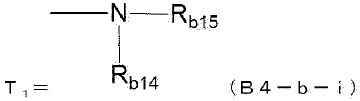
wherein R_{b14} and R_{b15} are each independently a hydrogen atom, a straight chain or branched chain alkyl group in which the number of carbon atoms is 1 to 8 or a substituent T₂ of the following formula (B4-b-ii), 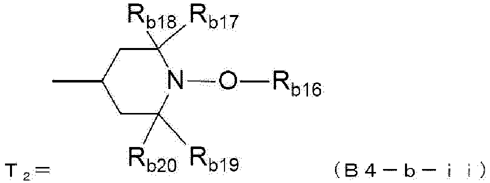
wherein R_{b16} has the same meaning as the meaning of R_{B5},
R_{b17}, R_{b18}, R_{b19} and R_{b20} each independently have the same meaning as the meaning of R_{B6}, R_{B7}, R_{B8} and R_{B9},
wherein, R_{b14} and R_{b15} may be bound to form a morpholino group, a piperidino group or a 1-piperazinyl group with the nitrogen atom to which they are bound; and 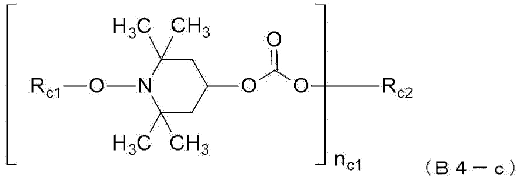
wherein R_{c1} represents an alkyl group or a hydroxyalkyl group in which the number of carbon atoms is 1 to 30, or an alkenyl group in which the number of carbon atoms is 2 to 30, and n_{c1} represents an integer of 1 to 6,
wherein when n_{c1} = 1, then R_{c2} represents an alkyl group in which the number of carbon atoms is 1 to 22, an alkenyl group in which the number of carbon atoms is 2 to 22 or a group of the following general formula (B4-c-i): 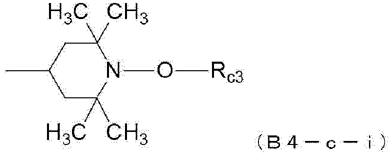
wherein R_{c3} represents an alkyl group or a hydroxyalkyl group in which the number of carbon atoms is 1 to 30, or an alkenyl group in which the number of carbon atoms is 2 to 30, and
wherein when n_{c1} = 2 to 6, then R_{c2} represents an n_{c1}-valent organic group in which the number of carbon atoms is 2 to 20.

11. The flame retardant composition according to claim 10, wherein the component (B) is selected from the group consisting of the following formulas (i), (ii) and (iii): 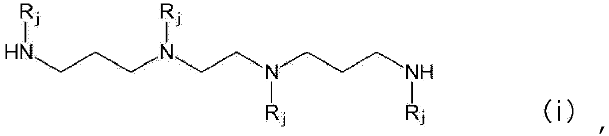 wherein in the formula (i), Rⱼ are each independently an hydrogen atom or the following organic group, with the proviso that at least one Rⱼ is the following organic group: 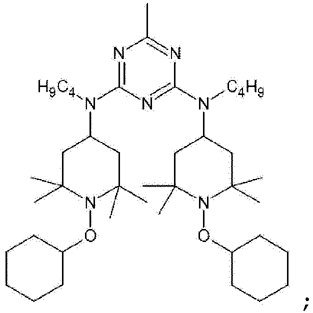 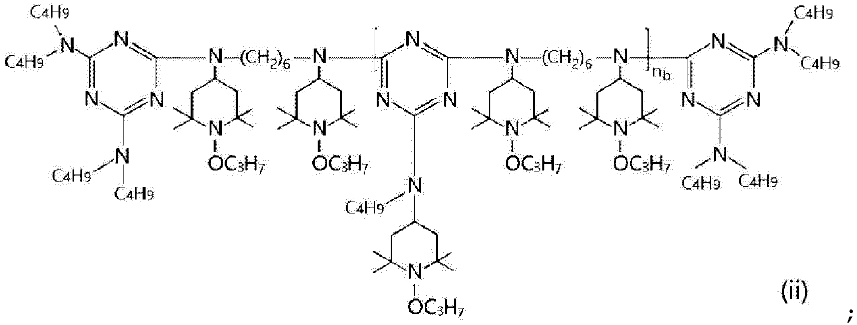 and 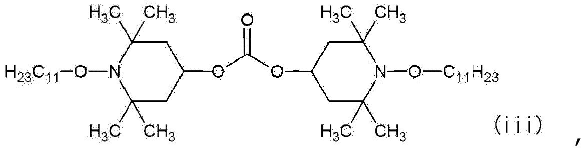 wherein, in the formula (ii), n_{b} is an integer of 1 to 10.

12. The flame retardant composition according to claim 9, wherein, in the formula (B3), R_{B5} is substituted with at least one hydroxyl group.

13. The flame retardant composition according to any one of claims 1 to 12, further comprising a triazine-based compound (component (C)) having a 1,3,5-triazine structure or a 1,3,5-triazine fused ring structure, preferably a cyanurate salt of an amine compound having a 1,3,5-triazine structure or a 1,3,5-triazine fused ring structure.

14. A flame retardant thermoplastic resin composition, which comprises the flame retardant composition according to any one of claims 1 to 13 and a thermoplastic resin (component (D)), preferably a polyolefin resin, more preferably polypropylene, polyethylene, or a copolymer comprising propylene or ethylene.

15. The flame retardant thermoplastic resin composition according to claim 14, which comprises the flame retardant composition according to claim 13 and a thermoplastic resin (component (D)).

## Patentansprüche

1. Flammhemmende Zusammensetzung für ein thermoplastisches Harz, wobei die Zusammensetzung Komponente (A) und Komponente (B) umfasst, wobei die Komponente (A) eine Phosphoramidatverbindung der folgenden allgemeinen Formel (I) ist: 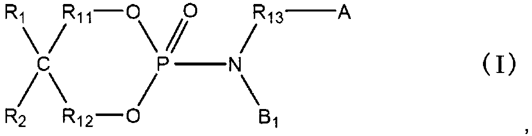
wobei R₁ und R₂ jeweils unabhängig voneinander ein Wasserstoffatom oder eine Alkylgruppe mit 1 bis 3 Kohlenstoffatomen sind, R₁₁ und R₁₂ jeweils unabhängig voneinander eine Alkylengruppe mit 1 bis 3 Kohlenstoffatomen sind, R₁₃ eine Alkylengruppe mit 1 bis 6 Kohlenstoffatomen ist, B₁ ein Wasserstoffatom oder eine Alkylgruppe mit 1 bis 6 Kohlenstoffatomen ist und A ein Wasserstoffatom oder eine organische Gruppe der allgemeinen Formel (II) ist: 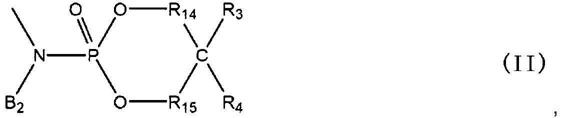
wobei R₃ und R₄ jeweils unabhängig voneinander ein Wasserstoffatom oder eine Alkylgruppe mit 1 bis 3 Kohlenstoffatomen sind, R₁₄ und R₁₅ jeweils unabhängig voneinander eine Alkylengruppe mit 1 bis 3 Kohlenstoffatomen sind und B₂ ein Wasserstoffatom oder eine Alkylgruppe mit 1 bis 6 Kohlenstoffatomen ist, und wobei, wenn A ein Wasserstoffatom ist und B₁ eine Alkylgruppe mit 1 bis 6 Kohlenstoffatomen ist, B₁ und R₁₃-A verbunden sein können, um einen stickstoffhaltigen Heterocyclus mit dem Stickstoffatom, an das sie gebunden sind, zu bilden und, wenn A eine organische Gruppe der allgemeinen Formel (II) ist, B₂ eine Alkylgruppe mit 1 bis 6 Kohlenstoffatomen ist und B₁ eine Alkylgruppe mit 1 bis 6 Kohlenstoffatomen ist, B₁ und B₂ verbunden sein können, um einen stickstoffhaltigen Heterocyclus mit dem Stickstoffatom, an das sie gebunden sind, und R₁₃ zu bilden, und
wobei die Komponente (B) eine gehinderte Aminverbindung ist.

2. Flammhemmende Zusammensetzung nach Anspruch 1, bei der in der allgemeinen Formel (I) A eine organische Gruppe der allgemeinen Formel (II) ist.

3. Flammhemmende Zusammensetzung nach einem der Ansprüche 1 bis 2, bei der in der allgemeinen Formel (I) R₁ und R₂ Methylgruppen sind und R₁₁ und R₁₂ Methylengruppen sind.

4. Flammhemmende Zusammensetzung nach einem der Ansprüche 1 bis 3, bei der in der allgemeinen Formel (I) A eine organische Gruppe der allgemeinen Formel (II) ist, R₃ und R₄ Methylgruppen sind und R₁₄ und R₁₅ Methylengruppen sind.

5. Flammhemmende Zusammensetzung nach Anspruch 4, bei der in der allgemeinen Formel (I) R₁₃ eine Alkylengruppe mit 1 bis 4 Kohlenstoffatomen und vorzugsweise mit 1 bis 2 Kohlenstoffatomen ist.

6. Flammhemmende Zusammensetzung nach Anspruch 4 oder 5, bei der in der allgemeinen Formel (I) B₁ und B₂ Wasserstoffatome sind.

7. Flammhemmende Zusammensetzung nach einem der Ansprüche 1 bis 6, bei der die Komponente (B) eine Verbindung mit einer Piperidin-Struktur ist.

8. Flammhemmende Zusammensetzung nach einem der Ansprüche 1 bis 6, bei der die Komponente (B) eine gehinderte Aminverbindung vom NOR-Typ ist, wobei vorzugsweise ein Kettenalkyl an ein Sauerstoffatom in der gehinderten Aminstruktur vom NOR-Typ gebunden ist.

9. Flammhemmende Zusammensetzung nach einem der Ansprüche 1 bis 6, bei der die Komponente (B) eine gehinderte Aminstruktur vom NOR-Typ umfasst, die die Piperidin-Struktur der folgenden allgemeinen Formel (B3) aufweist: 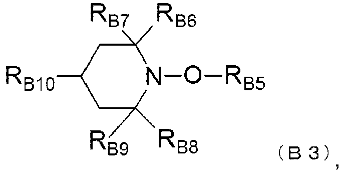
wobei R_{B5} eine geradkettige oder verzweigte Alkylgruppe mit 1 bis 30 Kohlenstoffatomen, eine geradkettige oder verzweigte Alkenylgruppe mit 2 bis 30 Kohlenstoffatomen, eine Cycloalkylgruppe mit 5 bis 18 Kohlenstoffatomen, eine Cycloalkenylgruppe mit 5 bis 18 Kohlenstoffatomen oder eine geradkettige oder verzweigte Alkylgruppe mit 1 bis 4 Kohlenstoffatomen, die mit einer Phenylgruppe substituiert ist, wobei R_{B5} mit mindestens einer Hydroxylgruppe substituiert sein kann,
R_{B6}, R_{B7}, R_{B8} und R_{B9} jeweils unabhängig voneinander eine geradkettige oder verzweigte Alkylgruppe mit 1 bis 4 Kohlenstoffatomen sind und
R_{B10} eine beliebige organische Gruppe ist.

10. Flammhemmende Zusammensetzung nach Anspruch 9, bei der die Komponente (B) aus der Gruppe bestehend aus den folgenden allgemeinen Formeln (B4-a), (B4-b) und (B4-c) ausgewählt ist: 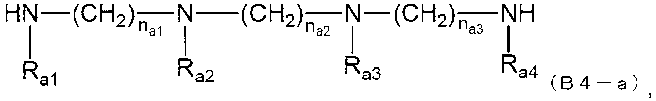
wobei nₐ₁, nₐ₂ und nₐ₃ jeweils unabhängig voneinander eine ganze Zahl von 1 bis 4 sind, Rₐ₁ bis Rₐ₄ jeweils unabhängig voneinander ein Wasserstoffatom oder eine organische Gruppe der folgenden Formel (B4-a-i) sind, mit der Maßgabe, dass mindestens eines von Rₐ₁ bis Rₐ₄ eine organische Gruppe der folgenden Formel (B4-a-i) ist: 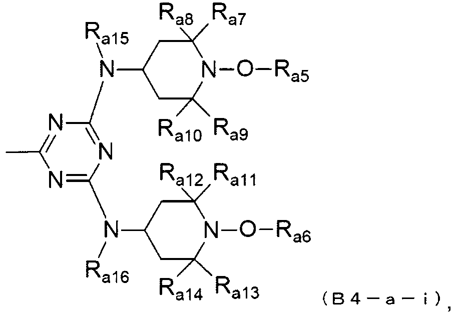
wobei Rₐ₅ und Rₐ₆ jeweils unabhängig voneinander die gleiche Bedeutung wie R_{B5} haben, Rₐ₇, Rₐ₈, Rₐ₉ und Rₐ₁₀ jeweils unabhängig voneinander die gleiche Bedeutung wie R_{B6}, R_{B7}, R_{B8} und R_{B}, haben,
Rₐ₁₁, Rₐ₁₂, Rₐ₁₃ und Rₐ₁₄ jeweils unabhängig voneinander die gleiche Bedeutung wie R_{B6}, R_{B7}, R_{B8} und R_{B9} haben und
Rₐ₁₅ und Rₐ₁₆ jeweils unabhängig voneinander ein Wasserstoffatom, eine geradkettige oder verzweigte Alkylgruppe mit 1 bis 12 Kohlenstoffatomen oder eine geradkettige oder verzweigte Alkenylgruppe mit 2 bis 12 Kohlenstoffatomen sind; 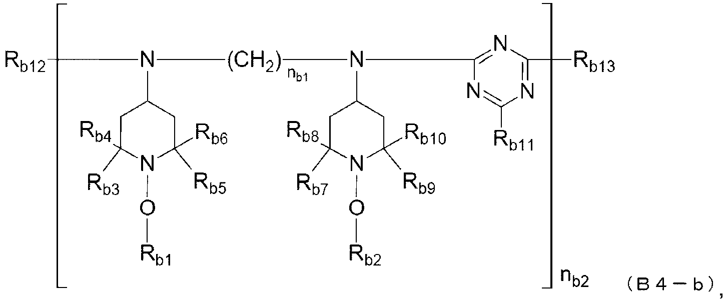
wobei n_{b1} eine ganze Zahl von 2 bis 8 ist,
n_{b2} eine ganze Zahl von 1 bis 10 ist,
R_{b1} und R_{b2} jeweils unabhängig voneinander die gleiche Bedeutung wie R_{B5} haben,
R_{b3}, R_{b4}, R_{b5} und R_{b6} jeweils unabhängig voneinander die gleiche Bedeutung wie R_{B6}, R_{B7}, R_{B8} und R_{B9} haben,
R_{b7}, R_{b8}, R_{b9} und R_{b10} jeweils unabhängig voneinander die gleiche Bedeutung wie R_{B6}, R_{B7}, R_{B8} und R_{B9} haben,
R_{b11} ein stickstoffhaltiger Substituent T₁ der folgenden Formel (B4-b-i) ist und
R_{b12} und R_{b13} jeweils unabhängig voneinander eine beliebige organische Gruppe sind 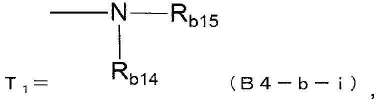
wobei R_{b14} und R_{b15} jeweils unabhängig voneinander ein Wasserstoffatom, eine geradkettige oder verzweigte Alkylgruppe mit 1 bis 8 Kohlenstoffatomen oder ein Substituent T₂ der folgenden Formel (B4-b-ii) sind 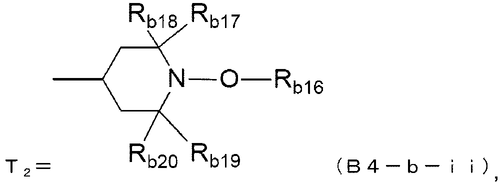
wobei R_{b16} die gleiche Bedeutung wie R_{B5} hat,
R_{b17}, R_{b18}, R_{b19} und R_{b20} jeweils unabhängig voneinander die gleiche Bedeutung wie R_{B6}, R_{B7}, R_{B8} und R_{B9} haben,
wobei R_{b14} und R_{b15} verbunden sein können, um mit dem Stickstoffatom, an das sie gebunden sind, eine Morpholinogruppe, eine Piperidinogruppe oder eine 1-Piperazinylgruppe zu bilden; und 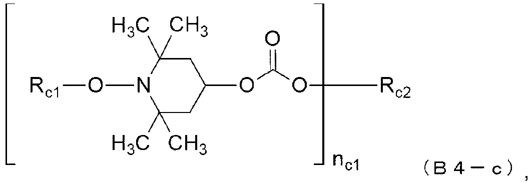
wobei R_{c1} eine Alkylgruppe oder eine Hydroxyalkylgruppe mit 1 bis 30 Kohlenstoffatomen oder eine Alkenylgruppe mit 2 bis 30 Kohlenstoffatomen ist und n_{c1} eine ganze Zahl von 1 bis 6 ist,
wobei, wenn n_{c1} = 1 ist, R_{c2} eine Alkylgruppe mit 1 bis 22 Kohlenstoffatomen, eine Alkenylgruppe mit 2 bis 22 Kohlenstoffatomen oder eine Gruppe der folgenden allgemeinen Formel (B4-c-i) ist: 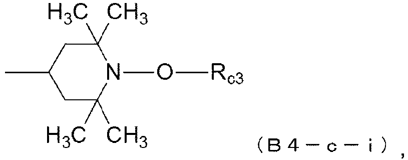
wobei R_{c3} eine Alkylgruppe oder eine Hydroxyalkylgruppe mit 1 bis 30 Kohlenstoffatomen oder eine Alkenylgruppe mit 2 bis 30 Kohlenstoffatomen ist, und
wobei, wenn n_{c1} = 2 bis 6 ist, R_{c2} eine n_{c1}-valente organische Gruppe mit 2 bis 20 Kohlenstoffatomen ist.

11. Flammhemmende Zusammensetzung nach Anspruch 10, bei der die Komponente (B) aus der Gruppe bestehend aus den folgenden Formeln (i), (ii) und (iii) ausgewählt ist: 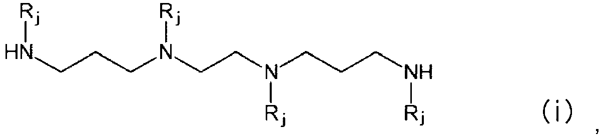 wobei in der Formel (i) Rⱼ jeweils unabhängig voneinander ein Wasserstoffatom oder die folgende organische Gruppe sind, mit der Maßgabe, dass mindestens ein Rⱼ die folgende organische Gruppe ist: 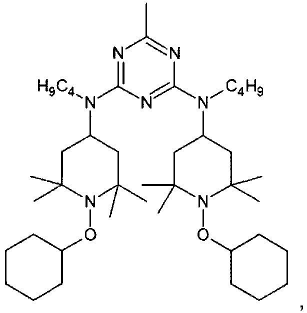 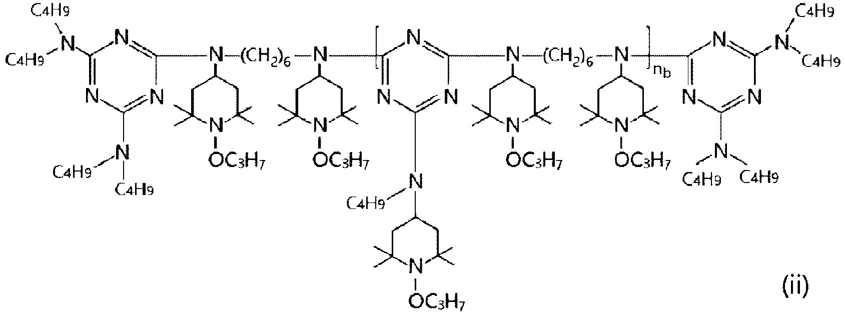 und 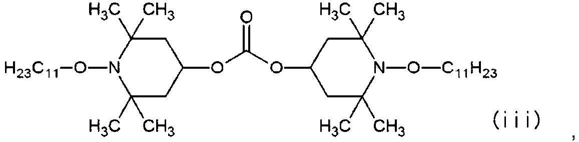 wobei in der Formel (ii) n_{b} eine ganze Zahl von 1 bis 10 ist.

12. Flammhemmende Zusammensetzung nach Anspruch 9, bei der in der Formel (B3) R_{B5} mit mindestens einer Hydroxylgruppe substituiert ist.

13. Flammhemmende Zusammensetzung nach einem der Ansprüche 1 bis 12, die ferner eine Verbindung auf Triazinbasis (Komponente (C)) mit einer 1,3,5-Triazin-Struktur oder einer anellierten 1,3,5-Triazin-Ringstruktur, vorzugsweise ein Cyanuratsalz einer Aminverbindung mit einer 1,3,5-Triazin-Struktur oder einer anellierten 1,3,5-Triazin-Ringstruktur, umfasst.

14. Flammhemmende thermoplastische Harzzusammensetzung, die die flammhemmende Zusammensetzung gemäß einem der Ansprüche 1 bis 13 und ein thermoplastisches Harz (Komponente (D)), vorzugsweise ein Polyolefinharz, weiter bevorzugt Polypropylen, Polyethylen oder ein Propylen oder Ethylen umfassendes Copolymer umfasst.

15. Flammhemmende thermoplastische Harzzusammensetzung nach Anspruch 14, die die flammhemmende Zusammensetzung gemäß Anspruch 13 und ein thermoplastisches Harz (Komponente (D)) umfasst.

## Revendications

1. Composition ignifuge pour résine thermoplastique, laquelle composition comprend un composant (A) et un composant (B),
lequel composant (A) est un composé de type phosphoramidate, représenté par la formule générale (I) suivante : 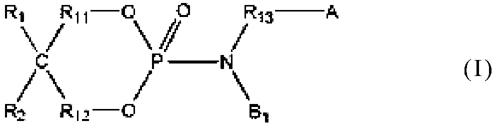
dans laquelle R₁ et R₂ représentent chacun, indépendamment, un atome d'hydrogène ou un groupe alkyle dont le nombre d'atomes de carbone vaut de 1 à 3, R₁₁ et R₁₂ représentent chacun, indépendamment, un groupe alcanediyle dont le nombre d'atomes de carbone vaut de 1 à 3, R₁₃ représente un groupe alcanediyle dont le nombre d'atomes de carbone vaut de 1 à 6, B₁ représente un atome d'hydrogène ou un groupe alkyle dont le nombre d'atomes de carbone vaut de 1 à 6, et A représente un atome d'hydrogène ou un groupe organique représenté par la formule générale (II) : 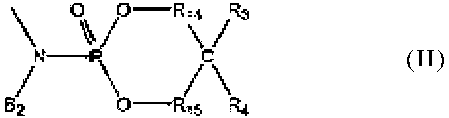
dans laquelle R₃ et R₄ représentent chacun, indépendamment, un atome d'hydrogène ou un groupe alkyle dont le nombre d'atomes de carbone vaut de 1 à 3, R₁₄ et R₁₅ représentent chacun, indépendamment, un groupe alcanediyle dont le nombre d'atomes de carbone vaut de 1 à 3, et B₂ représente un atome d'hydrogène ou un groupe alkyle dont le nombre d'atomes de carbone vaut de 1 à 6,
étant entendu
que, si A représente un atome d'hydrogène et B₁ représente un groupe alkyle dont le nombre d'atomes de carbone vaut de 1 à 6, alors les groupes représentés par B₁ et R₁₃-A peuvent être raccordés pour former un hétérocycle azoté avec l'atome d'azote auquel ils sont liés,
et que, si A représente un groupe organique de formule générale (II), B₂ représente un groupe alkyle dont le nombre d'atomes de carbone vaut de 1 à 6 et B₁ représente un groupe alkyle dont le nombre d'atomes de carbone vaut de 1 à 6, alors les groupes représentés par B₁ et B₂ peuvent être raccordés pour former un hétérocycle azoté avec les atomes d'azote auxquels ils sont liés et le groupe représenté par R₁₃, et lequel composant (B) est un composé de type amine encombrée.

2. Composition ignifuge conforme à la revendication 1, dans laquelle, dans la formule générale (I), A représente un groupe organique représenté par la formule générale (II).

3. Composition ignifuge conforme à l'une des revendications 1 à 2, dans laquelle, dans la formule générale (I), R₁ et R₂ représentent des groupes méthyle, et R₁₁ et R₁₂ représentent des groupes méthanediyle.

4. Composition ignifuge conforme à l'une des revendications 1 à 3, dans laquelle, dans la formule générale (I), A représente un groupe organique représenté par la formule générale (II), R₃ et R₄ représentent des groupes méthyle, et R₁₄ et R₁₅ représentent des groupes méthanediyle.

5. Composition ignifuge conforme à la revendication 4, dans laquelle, dans la formule générale (I), R₁₃ représente un groupe alcanediyle dont le nombre d'atomes de carbone vaut de 1 à 4, et de préférence 1 ou 2.

6. Composition ignifuge conforme à la revendication 4 ou 5, dans laquelle, dans la formule générale (I), B₁ et B₂ représentent des atomes d'hydrogène.

7. Composition ignifuge conforme à l'une des revendications 1 à 6, dans laquelle le composant (B) est un composé qui présente une structure de type pipéridine.

8. Composition ignifuge conforme à l'une des revendications 1 à 6, dans laquelle le composant (B) est un composé de type amine encombrée de type NOR, et de préférence un composé dans lequel un groupe alkyle en chaîne est lié à un atome d'oxygène au sein de la structure d'amine encombrée de type NOR.

9. Composition ignifuge conforme à l'une des revendications 1 à 6, dans laquelle le composant (B) comporte une structure d'amine encombrée de type NOR qui a la structure de pipéridine représentée par la formule générale (B3) suivante : 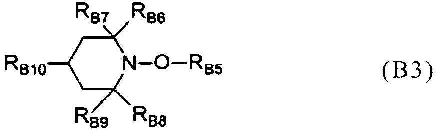 dans laquelle
R_{B5} représente un groupe alkyle à chaîne linéaire ou ramifiée dont le nombre d'atomes de carbone vaut de 1 à 30, un groupe alcényle à chaîne linéaire ou ramifiée dont le nombre d'atomes de carbone vaut de 2 à 30, un groupe cycloalkyle dont le nombre d'atomes de carbone vaut de 5 à 18, un groupe cycloalcényle dont le nombre d'atomes de carbone vaut de 5 à 18, ou un groupe alkyle à chaîne linéaire ou ramifiée, porteur d'un substituant phényle, duquel groupe alkyle le nombre d'atomes de carbone vaut de 1 à 4, étant entendu que ce groupe symbolisé par R_{B5} peut porter au moins un substituant hydroxyle,
R_{B6}, R_{B7}, R_{B8} et R_{B9} représentent chacun, indépendamment, un groupe alkyle à chaîne linéaire ou ramifiée dont le nombre d'atomes de carbone vaut de 1 à 4,
et R_{B10} représente n'importe quel groupe organique.

10. Composition ignifuge, conforme à la revendication 9, dans laquelle le composant (B) est choisi dans l'ensemble constitué par les composés de formules générales (B4-a), (B4-b) et (B4-c) suivantes : 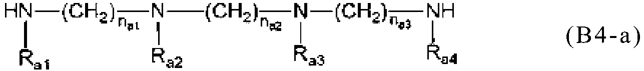
dans laquelle les indices nₐ₁, nₐ₂, et nₐ₃ sont chacun, indépendamment, un nombre entier valant de 1 à 4, et les Rₐ₁ à Rₐ₄ représentent chacun, indépendamment, un atome d'hydrogène ou un groupe organique de formule (B4-a-i) suivante, sous réserve qu'au moins l'un des Rₐ₁ à Rₐ₄ représente un groupe organique de formule (B4-a-i) suivante : 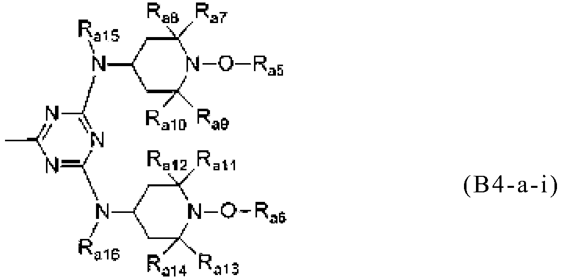
dans laquelle
- Rₐ₅ et Rₐ₆ ont chacun, indépendamment, la même signification que R_{B5},
- Rₐ₇, Rₐ₈, Rₐ₉ et Rₐ₁₀ ont chacun, indépendamment, la même signification que R_{B6}, R_{B7}, R_{B8} et R_{B9},
- Rₐ₁₁, Rₐ₁₂, Rₐ₁₃ et Rₐ₁₄ ont chacun, indépendamment, la même signification que R_{B6}, R_{B7}, R_{B8} et R_{B9},
- et Rₐ₁₅ et Rₐ₁₆ représentent chacun, indépendamment, un atome d'hydrogène, un groupe alkyle à chaîne linéaire ou ramifiée dont le nombre d'atomes de carbone vaut de 1 à 12, ou un groupe alcényle à chaîne linéaire ou ramifiée dont le nombre d'atomes de carbone vaut de 2 à 12 ; 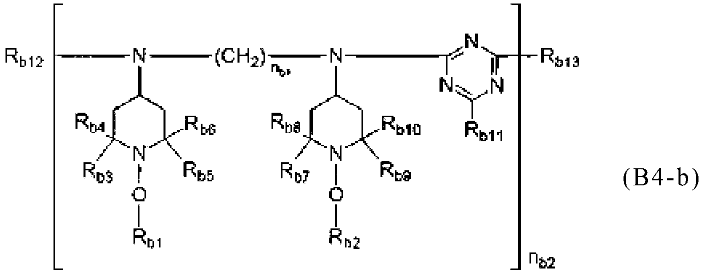
dans laquelle
- l'indice n_{b1} est un nombre entier valant de 2 à 8,
- l'indice n_{b2} est un nombre entier valant de 1 à 10,
- R_{b1} et R_{b2} ont chacun, indépendamment, la même signification que R_{B5},
- R_{b3}, R_{b4}, R_{b5} et R_{b6} ont chacun, indépendamment, la même signification que R_{B6}, R_{B7}, R_{B8} et R_{B9},
- R_{b7}, R_{b8}, R_{b9} et R_{b10} ont chacun, indépendamment, la même signification que R_{B6}, R_{B7}, R_{B8} et R_{B9},
- R_{b11} représente un substituant azoté T₁ de formule (B4-b-i) indiquée ci-après,
- et R_{b12} et R_{b13} représentent chacun, indépendamment, n'importe quel groupe organique ; 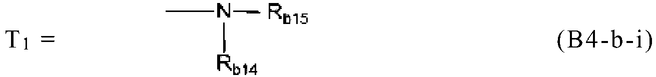
dans laquelle formule R_{b14} et R_{b15} représentent chacun, indépendamment, un atome d'hydrogène, un groupe alkyle à chaîne linéaire ou ramifiée dont le nombre d'atomes de carbone vaut de 1 à 8, ou un substituant T₂ de formule (B4-b-ii) suivante : 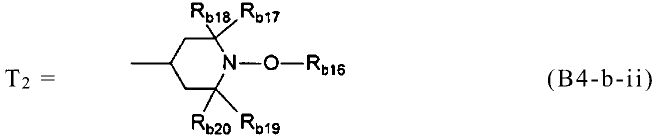
dans laquelle
- R_{b16} a la même signification que R_{B5},
- et R_{b17}, R_{b18}, R_{b19} et R_{b20} ont chacun, indépendamment, la même signification que R_{B6}, R_{B7}, R_{B8} et R_{B9},
étant entendu que les groupes représentés par R_{b14} et R_{b15} peuvent être raccordés de manière à former, avec l'atome d'azote auquel ils sont liés, un groupe morpholino, pipéridino ou pipérazin-1-yle ; 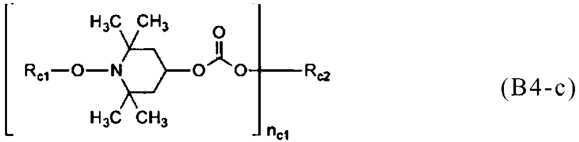
dans laquelle R_{c1} représente un groupe alkyle ou hydroxy-alkyle dont le nombre d'atomes de carbone vaut de 1 à 30, ou un groupe alcényle dont le nombre d'atomes de carbone vaut de 2 à 30, et l'indice n_{c1} est un nombre entier valant de 1 à 6,
et dans laquelle, si n_{c1} vaut 1, alors R_{c2} représente un groupe alkyle dont le nombre d'atomes de carbone vaut de 1 à 22, un groupe alcényle dont le nombre d'atomes de carbone vaut de 2 à 22, ou un groupe de formule générale (B4-c-i) suivante : 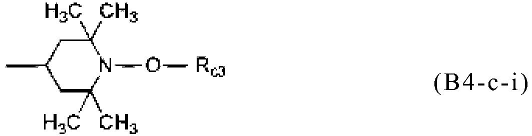
dans laquelle R_{c3} représente un groupe alkyle ou hydroxy-alkyle dont le nombre d'atomes de carbone vaut de 1 à 30, ou un groupe alcényle dont le nombre d'atomes de carbone vaut de 2 à 30,
et si n_{c1} vaut de 2 à 6, alors R_{c2} représente un groupe organique de valence n_{c1} et dont le nombre d'atomes de carbone vaut de 2 à 20.

11. Composition ignifuge conforme à la revendication 10, dans laquelle le composant (B) est choisi dans l'ensemble constitué par les composés de formules (i), (ii) et (iii) suivantes : 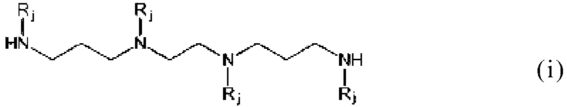 dans laquelle formule (i) les Rⱼ représentent chacun, indépendamment, un atome d'hydrogène ou le groupe organique de formule suivante, sous réserve qu'au moins l'un des Rj représente ce groupe organique : 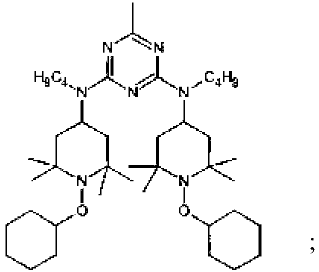 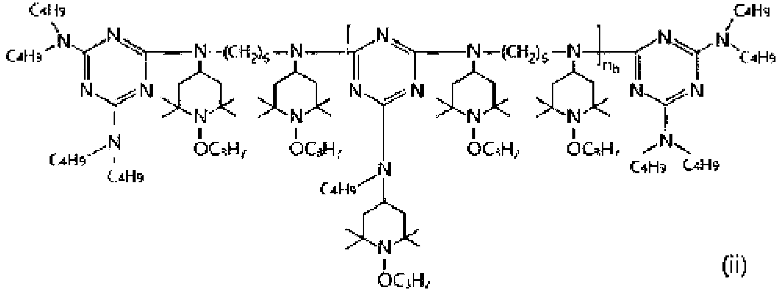 et 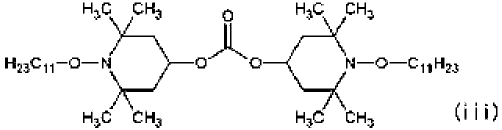 étant entendu que dans la formule (ii), l'indice n_{b} est un nombre entier valant de 1 à 10.

12. Composition ignifuge, conforme à la revendication 9, dans laquelle, dans la formule (B3), le groupe symbolisé par R_{B5} porte au moins un substituant hydroxyle.

13. Composition ignifuge, conforme à l'une des revendications 1 à 12, comportant en outre un composé de type triazine (composant C) qui présente une structure de 1,3,5-triazine ou une structure de cycles de 1,3,5-triazine condensés, et de préférence, un sel cyanurate d'un composé de type amine présentant une structure de 1,3,5-triazine ou une structure de cycles de 1,3,5-triazine condensés.

14. Composition de résine thermoplastique ignifuge, qui comprend une composition ignifuge conforme à l'une des revendications 1 à 12 et une résine thermoplastique (composant (D)), de préférence une résine de type polyoléfine, et mieux encore un polypropylène, un polyéthylène ou un copolymère à base de propylène ou d'éthylène.

15. Composition de résine thermoplastique ignifuge, conforme à la revendication 14, comprenant une composition ignifuge conforme à la revendication 13 et une résine thermoplastique (composant (D)).
